# EUROPEAN PATENT SPECIFICATION

(11) **EP 3 182 792 B1**
(45) Date of publication and mention of the grant of the patent: **21.10.2020**
(21) Application number: 14900635.5
(22) Date of filing: 25.08.2014
(51) Int. Cl.: H04W 88/08, H04W 28/18, H04W 28/16, H04W 72/04, H04W 74/00, H04W 74/08

(54) **METHOD FOR ADJUSTING CLEAR CHANNEL ASSESSMENT THRESHOLD, AND ACCESS POINT**
VERFAHREN ZUR ANPASSUNG EINES SCHWELLENWERTES ZUR BEURTEILUNG EINES FREIEN KANALS UND ZUGANGSPUNKT
PROCÉDÉ POUR RÉGLER UN SEUIL D'ÉVALUATION DE CANAL LIBRE, ET POINT D'ACCÈS

(43) Date of publication of application: 21.06.2017
(73) Proprietor: Huawei Technologies Co. Ltd., Shenzhen, Guangdong 518129 (CN)
(72) Inventor: KONG, Xueli, Shenzhen Guangdong 518129 (CN); LAN, Zhou, Shenzhen Guangdong 518129 (CN); LI, Yanchun, Shenzhen Guangdong 518129 (CN)
(74) Representative: Goddar, Heinz J.
(86) International application number: PCT/CN2014/085096
(87) International publication number: WO 2016/029342

(56) References cited:
- CN-A- 102 769 912
- CN-A- 103 891 379
- US-A1- 2005 152 313
- US-A1- 2010 002 610
- US-A1- 2011 019 721
- US-A1- 2014 119 303

## Description

### TECHNICAL FIELD

The present invention relates to the field of wireless communications technologies, and in particular, to a method for adjusting clear channel assessment threshold and an access point.

### BACKGROUND

In the 802.11 protocol of the Institute of Electrical and Electronics Engineers (IEEE) standard, channel back-off and contention are performed by using a carrier sense multiple access with collision avoidance (CSMA/CA) mechanism. The CSMA/CA mechanism requires an access point and a station to sense a channel before sending a signal, so as to avoid collision. Methods used by the access point and the station for sensing a channel include physical carrier sensing and virtual carrier sensing. The signal can be sent only when both a result of physical carrier sensing and a result of virtual carrier sensing indicate that the channel is idle.

In the physical carrier sensing, a status of the channel is determined mainly by using a clear channel assessment (CCA) method. Before sending data on the channel, a node needs to perform determining. If power of a received valid orthogonal frequency division multiplexing (OFDM) transmit signal is greater than or equal to a CCA threshold, an assessment result of a CCA method is that the channel is in a busy state. If power of a received valid orthogonal frequency division multiplexing transmit signal is less than a CCA threshold Otherwise, it is considered that the channel is in a idle state.

Currently, a fixed CCA threshold is used in the existing 802.11 protocol. For example, if a channel is maliciously used by the outside and consequently a channel assessment result of a CCA method is busy, a node in a network can hardly succeed in contending for the channel. Therefore, the fixed CCA threshold causes communication efficiency reduction.

US 2005/152313 A1 discloses a method for optimizing CCA parameters in a wireless local area network having an access point (AP) and at least one station begins by receiving a trigger condition. An upper bound and a lower bound for an energy detect threshold (EDT) parameter are determined. A value of the EDT parameter is calculated and is bound by the upper bound and the lower bound. Lastly, the EDT parameter is updated. The method can be performed at each station or at the AP, with the updated CCA parameters being signaled to each station associated with the AP.

US 2010/002610 A1 discloses techniques for implementing power savings in a wireless local area network (WLAN). A centralized controller can be employed to gather data about network activity and select access points to switch to power save mode. Optionally, the controller may designate certain access points to remain active so as to monitor for clients attempting to access the WLAN.

US 2011/019721 A1 discloses an apparatus where transmitter operating parameters are adjusted based on channel condition data obtained from a transmitter and/or from a receiver communicating with the transmitter.

### SUMMARY

The present invention provide a method of claim 11 and claim 17 for adjusting a clear channel assessment threshold and a first access point of claim 1 and a second access point of claim 7, so as to adjust a CCA threshold dynamically.

According to a first aspect, an access point is provided, where the access point includes: a receiving unit, configured to receive parameter information sent by another access point, where the parameter information sent by the another access point indicates a current channel occupation status of a basic service set in which the another access point is located; and an adjustment unit, configured to adjust a clear channel assessment CCA threshold of the access point according to the parameter information sent by the another access point, where the parameter information sent by the another access point includes at least one of the following parameters: a quantity of active nodes in the basic service set in which the another point is located, or transmit power of a station in the basic service set in which the another point is located.

With reference to the first aspect, in a first possible implementation manner of the first aspect, the parameter information sent by the another access point includes a quantity of active nodes in the basic service set in which the another access point is located, and the adjustment unit is specifically configured to: increase the CCA threshold of the access point when the quantity of active nodes in the basic service set in which the another access point is located is greater than a quantity of active nodes in a basic service set in which the access point is located; or reduce the CCA threshold of the access point when the quantity of active nodes in the basic service set in which the another access point is located is less than a quantity of active nodes in a basic service set in which the access point is located.

With reference to the first possible implementation manner of the first aspect, in a second possible implementation manner of the first aspect, the adjustment unit is specifically configured to adjust the CCA threshold of the access point according to the parameter information sent by the another access point and other parameter information, and the other parameter information includes at least one piece of the following information: a location of a station in the basic service set in which the access point is located, transmit power of a station in the basic service set in which the access point is located, or a path loss of the basic service set in which the access point is located.

With reference to any one of the first aspect or the first to the second possible implementation manners of the first aspect, in a third possible implementation manner of the first aspect, the receiving unit is further configured to receive a CCA threshold of the another access point sent by the another access point, and the adjustment unit is specifically configured to adjust the CCA threshold of the another access point sent by the another access point, and the adjustment unit is specifically configured to adjust the CCA threshold of the access point according to the parameter information and the CCA threshold of the another access point that are sent by the another access point.

With reference to any one of the first aspect or the first to the third possible implementation manners of the first aspect, in a fourth possible implementation manner of the first aspect, the access point further includes: a storage unit, configured to store a CCA list, where the CCA list includes identification information of a neighboring access point of the access point, a CCA threshold of the neighboring access point, and parameter information that indicates a current channel occupation status of a basic service set in which the neighboring access point is located.

With reference to the fourth possible implementation manner of the first aspect, in a fifth possible implementation manner of the first aspect, the adjustment unit is specifically configured to adjust the CCA threshold of the access point according to a change of the CCA list.

With reference to any one of the third to the fifth possible implementation manners of the first aspect, in a sixth possible implementation manner of the first aspect, the access point further includes: a sending unit, configured to send the adjusted CCA threshold of the access point to the neighboring access point of the access point.

With reference to any one of the first aspect or the first to the fifth possible implementation manners of the first aspect, in a seventh possible implementation manner of the first aspect, the access point further includes: a sending unit, configured to send indication information to the station in the basic service set in which the access point is located, where the indication information is used to instruct the station to adjust a CCA threshold of the station according to the indication information.

With reference to the seventh possible implementation manner of the first aspect, in an eighth possible implementation manner of the first aspect, the indication information sent by the sending unit includes the adjusted CCA threshold of the access point.

With reference to any one of the first aspect or the first to the eighth possible implementation manners of the first aspect, in a ninth possible implementation manner of the first aspect, the receiving unit is specifically configured to receive a CCA request frame sent by the another access point, and the CCA request frame includes the parameter information sent by the another access point.

With reference to the ninth possible implementation manner of the first aspect, in a tenth possible implementation manner of the first aspect, the CCA request frame received by the receiving unit is carried in an access network query protocol element or a public action frame.

With reference to the sixth possible implementation manner of the first aspect, in an eleventh possible implementation manner of the first aspect, the sending unit is specifically configured to send a CCA response frame to the neighboring access point, and the CCA response frame includes the adjusted CCA threshold of the access point.

With reference to the eleventh possible implementation manner of the first aspect, in a twelfth possible implementation manner of the first aspect, the CCA response frame sent by the sending unit is carried in an access network query protocol element or a public action frame.

With reference to the seventh possible implementation manner of the first aspect or the eighth possible implementation manner of the first aspect, in a thirteenth possible implementation manner of the first aspect, the indication information sent by the sending unit is carried in a beacon frame, a request to send frame, or a probe response frame.

With reference to the thirteenth possible implementation manner of the first aspect, in a fourteenth possible implementation manner of the first aspect, the beacon frame, the request to send frame, or the probe response frame includes a CCA adjust counter field.

According to a second aspect, an access point is provided, where the access point includes: a determining unit, configured to determine parameter information, where the parameter information indicates a current channel occupation status of a basic service set in which the access point is located; and a sending unit, configured to send the parameter information to a different access point, the parameter information includes at least one of the following parameters: a quantity of active nodes in the basic service set in which the access point is located, or transmit power of a station in the basic service set in which the access point is located.

With reference to the second aspect, in a first possible implementation manner of the second aspect, the parameter information includes a quantity of active nodes in the basic service set, and the determining unit is specifically configured to: when a quantity of added active nodes or reduced active nodes in the basic service set exceeds a threshold, determine that the quantity of active nodes in the basic service set is the parameter information.

With reference to the second aspect or the first possible implementation manner of the second aspect, in the second possible implementation manner of the second aspect, the sending unit is further configured to send a clear channel assessment CCA threshold of the access point to the different access point.

With reference to the second possible implementation manner of the second aspect, in a third possible implementation manner of the second aspect, the sending unit is specifically configured to send a CCA response frame to the different access point, and the CCA response frame includes the CCA threshold of the access point.

With reference to the third possible implementation manner of the second aspect, in a fourth possible implementation manner of the second aspect, the CCA response frame sent by the sending unit is carried in an access network query protocol element or a public action frame.

With reference to any one of the second aspect or the first to the fourth possible implementation manners of the second aspect, in a fifth possible implementation manner of the second aspect, the sending unit is specifically configured to send a CCA request frame to the different access point, and the CCA request frame includes the parameter information.

With reference to the fifth possible implementation manner of the second aspect, in a sixth possible implementation manner of the second aspect, the CCA request frame sent by the sending unit is carried in an access network query protocol element or a public action frame.

According to a third aspect, a method for adjusting a clear channel assessment threshold is provided, and the method includes: receiving, by an access point, parameter information sent by another access point, where the parameter information sent by the another access point indicates a current channel occupation status of a basic service set in which the another access point is located; and adjusting, by the access point, a clear channel assessment CCA threshold of the access point according to the parameter information sent by the another access point, where the parameter information sent by the another access point includes at least one of the following parameters: a quantity of active nodes in the basic service set in which the another point is located, or transmit power of a station in the basic service set in which the another point is located.

With reference to the third aspect, in a first possible implementation manner of the third aspect, the parameter information sent by the another access point includes a quantity of active nodes in the basic service set in which the another access point is located, and the adjusting, by the access point, a CCA threshold of the access point according to the parameter information sent by the another access point includes: increasing, by the access point, the CCA threshold of the access point when the quantity of active nodes in the basic service set in which the another access point is located is greater than a quantity of active nodes in a basic service set in which the access point is located; or reducing, by the access point, the CCA threshold of the access point when the quantity of active nodes in the basic service set in which the another access point is located is less than a quantity of active nodes in a basic service set in which the access point is located.

With reference to the first possible implementation manner of the third aspect, in a second possible implementation manner of the third aspect, the adjusting, by the access point, a clear channel assessment CCA threshold of the access point according to the parameter information sent by the another access point includes: adjusting, by the access point, the CCA threshold of the access point according to the parameter information sent by the another access point and other parameter information, where the other parameter information includes at least one piece of the following information: a location of a station in the basic service set in which the access point is located, transmit power of a station in the basic service set in which the access point is located, or a path loss of the basic service set in which the access point is located.

With reference to any one of the third aspect or the first to the second possible implementation manners of the third aspect, in a third possible implementation manner of the third aspect, the method further includes: receiving, by the access point, a CCA threshold of the another access point sent by the another access point, and the adjusting, by the access point, a clear channel assessment CCA threshold of the access point according to the parameter information sent by the another access point includes: adjusting, by the access point, the CCA threshold of the access point according to the parameter information and the CCA threshold of the another access point that are sent by the another access point.

With reference to any one of the third aspect or the first to the third possible implementation manners of the third aspect, in a fourth possible implementation manner of the third aspect, the method further includes:
determining, by the access point, a CCA list, where the CCA list includes identification information of a neighboring access point of the access point, a CCA threshold of the neighboring access point, and parameter information that indicates a current channel occupation status of a basic service set in which the neighboring access point is located.

With reference to the fourth possible implementation manner of the third aspect, in a fifth possible implementation manner of the third aspect, the adjusting, by the access point, a CCA threshold of the access point according to the parameter information sent by the another access point includes: adjusting, by the access point, the CCA threshold of the access point according to a change of the CCA list.

With reference to any one of the third to the fifth possible implementation manners of the third aspect, in a sixth possible implementation manner of the third aspect, the method further includes: sending, by the access point, the adjusted CCA threshold of the access point to the neighboring access point of the access point.

With reference to any one of the third aspect or the first to the fifth possible implementation manners of the third aspect, in a seventh possible implementation manner of the third aspect, the method further includes: sending, by the access point, indication information to the station in the basic service set in which the access point is located, where the indication information is used to instruct the station to adjust a CCA threshold of the station according to the indication information.

With reference to the seventh possible implementation manner of the third aspect, in an eighth possible implementation manner of the third aspect, the indication information includes the adjusted CCA threshold of the access point.

With reference to any one of the third aspect or the first to the eighth possible implementation manners of the third aspect, in a ninth possible implementation manner of the third aspect, the receiving, by an access point, parameter information sent by another access point includes: receiving, by the access point, a CCA request frame sent by the another access point, where the CCA request frame includes the parameter information sent by the another access point.

With reference to the ninth possible implementation manner of the third aspect, in a tenth possible implementation manner of the third aspect, the CCA request frame is carried in an access network query protocol element or a public action frame.

With reference to the sixth possible implementation manner of the third aspect, in an eleventh possible implementation manner of the third aspect, the sending, by the access point, the adjusted CCA threshold of the access point to the neighboring access point of the access point includes: sending, by the access point, a CCA response frame to the neighboring access point, where the CCA response frame includes the adjusted CCA threshold of the access point.

With reference to the eleventh possible implementation manner of the third aspect, in a twelfth possible implementation manner of the third aspect, the CCA response frame is carried in an access network query protocol element or a public action frame.

With reference to the seventh possible implementation manner of the third aspect or the eighth possible implementation manner of the third aspect, in a thirteenth possible implementation manner of the third aspect, the indication information is carried in a beacon frame, a request to send frame, or a probe response frame.

With reference to the thirteenth possible implementation manner of the third aspect, in a fourteenth possible implementation manner of the third aspect, the beacon frame, the request to send frame, or the probe response frame includes a CCA adjust counter field.

According to a fourth aspect, a method for adjusting a clear channel assessment threshold is provided, and the method includes: determining, by an access point, parameter information, where the parameter information indicates a current channel occupation status of a basic service set in which the access point is located; and sending, by the access point, the parameter information to a different access point, the parameter information includes at least one of the following parameters: a quantity of active nodes in the basic service set in which the access point is located, or transmit power of a station in the basic service set in which the access point is located.

With reference to the fourth aspect, in a first possible implementation manner of the fourth aspect, the parameter information includes a quantity of active nodes in the basic service set, and the determining, by an access point, parameter information includes: when a quantity of added active nodes or reduced active nodes in the basic service set exceeds a threshold, determining that the quantity of active nodes in the basic service set is the parameter information.

With reference to the fourth aspect or the first possible implementation manner of the fourth aspect, in a second possible implementation manner of the fourth aspect, the method further includes: sending, by the access point, a clear channel assessment CCA threshold of the access point to the different access point.

With reference to the second possible implementation manner of the fourth aspect, in a third possible implementation manner of the fourth aspect, the method further includes: the sending, by the access point, a clear channel assessment CCA threshold of the access point to the different access point includes: sending, by the access point, a CCA response frame to the different access point, where the CCA response frame includes the CCA threshold of the access point.

With reference to the third possible implementation manner of the fourth aspect, in a fourth possible implementation manner of the fourth aspect, the CCA response frame is carried in an access network query protocol element or a public action frame.

With reference to any one of the fourth aspect or the first to the fourth possible implementation manners of the fourth aspect, in a fifth possible implementation manner of the fourth aspect, the sending, by the access point, the parameter information to a different access point includes: sending, by the access point, a CCA request frame to the different access point, where the CCA request frame includes the parameter information.

With reference to the fifth possible implementation manner of the fourth aspect, in a sixth possible implementation manner of the fourth aspect, the CCA request frame is carried in an access network query protocol element or a public action frame.

In the embodiments of the present invention, an access point adjusts a CCA threshold of the access point according to parameter information that is sent by a different access point and that indicates a channel occupation status. Therefore, the CCA threshold of the access point can be adjusted dynamically, and communication efficiency is improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a scenario to which an embodiment of the present invention is applicable;
FIG. 2 is a block diagram of an access point according to an embodiment of the present invention;
FIG. 3 is a block diagram of an access point according to another embodiment of the present invention;
FIG. 4 is a schematic diagram of a CCA request frame according to an embodiment of the present invention;
FIG. 5 is a schematic diagram of a CCA response frame according to an embodiment of the present invention;
FIG. 6 is a schematic diagram of a CCA request frame according to another embodiment of the present invention;
FIG. 7 is a schematic diagram of a CCA response frame according to another embodiment of the present invention;
FIG. 8 is a schematic diagram of a beacon frame according to an embodiment of the present invention;
FIG. 9 is a schematic diagram of a request to send frame according to an embodiment of the present invention;
FIG. 10 is a schematic diagram of a probe response frame according to an embodiment of the present invention;
FIG. 11 is a block diagram of an access point according to an embodiment of the present invention;
FIG. 12 is a schematic flowchart of a method for adjusting a CCA threshold according to an embodiment of the present invention;
FIG. 13 is a schematic flowchart of a method for adjusting a CCA threshold according to another embodiment of the present invention;
FIG. 14 is a schematic flowchart of a method for adjusting a CCA threshold according to another embodiment of the present invention;
FIG. 15 is a schematic flowchart of a process of a method for adjusting a CCA threshold according to an embodiment of the present invention;
FIG. 16 is a block diagram of an access point according to another embodiment of the present invention; and
FIG. 17 is a block diagram of an access point according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that the technical solutions of the embodiments of the present invention may be applied to various wireless communications systems such as a system based on Wireless Fidelity (WIFI), Bluetooth, Worldwide Interoperability for Microwave Access (WIMAX), or Wireless LAN Authentication and Privacy Infrastructure (WAPI), or another communications system that interconnects terminals in a wireless manner.

An access point (AP) is also referred to as a wireless access point, a hotspot, or the like, and can access a communications network. The access point is connected to a switch in a wireless network, and is a core of the wireless network. The AP is an access point used by a mobile computer user to access a wired network, and is mainly applied to a home with broadband, an inside of a building, and an inside of a park, and typically covers a distance of dozens of meters or hundreds of meters. Currently, a prevalent technology is 802.11 series. The AP is equivalent to a bridge that connects a wired network and a wireless network, and a main function of the AP is connecting wireless network clients together and then connecting the wireless network to the Ethernet.

A station (STA) may be a wireless sensor, a wireless communications terminal or a mobile terminal, such as a mobile phone (or referred to as a "cellular" phone) that supports a WiFi communication function or a computer with a wireless communication function. For example, the station may be a portable, pocket-sized, handheld, computer built-in, or vehicle-mounted wireless communication apparatus that supports the WiFi communication function, and the station exchanges voice and/or data with a wireless access network.

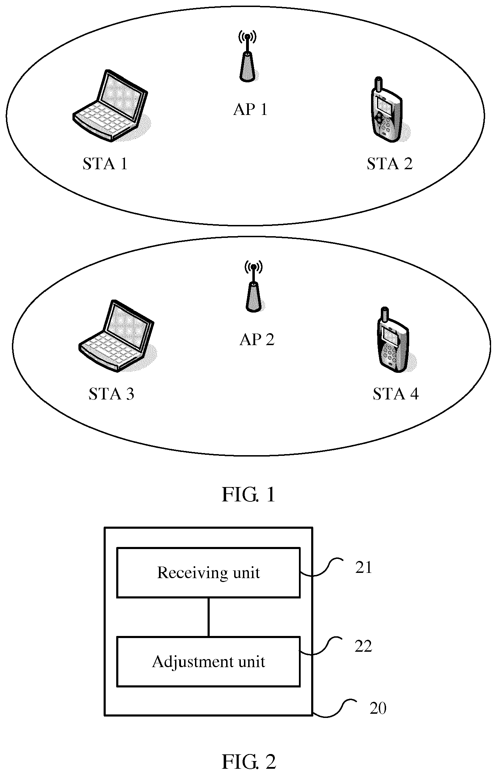

FIG. 1 is a schematic diagram of a scenario to which an embodiment of the present invention is applicable.

This embodiment of the present invention may be applied to a wireless local area network, and the wireless local area network may be a basic service set (BSS for short) that includes an access point. It should be understood that, in a basic network structure of a WiFi system, a network may include multiple basic service sets, and each basic service set may include one access point and multiple stations that belong to the access point. The access point and the station may be collectively referred to as a node.

As shown in FIG. 1, a wireless local area network applicable to this embodiment of the present invention may include multiple basic service sets. Each basic service set includes one AP and multiple STAs that belong to the AP, for example, an AP 1, and a STA 1 and a STA 2 that belong to the AP 1; an AP 2, and a STA 3 and a STA 4 that are belong to the AP 2.

The basic service set may include multiple parameters. In the parameters included in the basic service set, some parameters may affect a clear channel assessment CCA threshold of a node in the basic service set and a clear channel assessment CCA threshold of a node in another basic service set. Because the CCA threshold is used to assess a channel occupation status, these parameters may be used to indicate the channel occupation status. These parameters in the basic service set may be a quantity of active nodes in the basic service set, transmit power of a station in the basic service set, location information of a station in the basic service set, a path loss of the basic service set, or the like.

FIG. 2 is a block diagram of an access point according to an embodiment of the present invention. A wireless local area network may include multiple basic service sets and multiple corresponding access points. An access point 20 shown in FIG. 2 may be any access point in the multiple access points. As shown in FIG. 2, the access point 20 may include a receiving unit 21 and an adjustment unit 22.

The receiving unit 21 is configured to receive parameter information sent by another access point, where the parameter information sent by the another access point indicates a current channel occupation status of a basic service set in which the another access point is located.

The adjustment unit 22 is configured to adjust a clear channel assessment CCA threshold of the access point 20 according to the parameter information sent by the another access point.

In this embodiment of the present invention, an access point adjusts a CCA threshold of the access point according to parameter information that is sent by a different access point and that indicates a channel occupation status. Therefore, the CCA threshold of the access point can be adjusted dynamically, and communication efficiency is improved.

It should be understood that a basic service set may include one access point. A wireless local area network may include multiple basic service sets and multiple corresponding access points. In this embodiment of the present invention, only a specific access point in the multiple access points is described. It should be understood that, in the wireless local area network, each access point that can sense parameter information sent by another access point may adjust a CCA threshold of the access point by using a method in this embodiment of the present invention.

A part of parameter information in the parameter information included in the basic service set in which the another access point is located may affect the CCA threshold of the access point 20. Because the CCA threshold may be used to access a channel occupation status, the parameter information sent by the another access point may be used to indicate the current channel occupation status of the basic service set in which the another access point is located. Specifically, when the parameter information of the basic service set in which the another access point is located changes, the another access point may send the currently changed parameter information to a different access point.

In the wireless local area network, multiple pieces of parameter information of multiple basic service sets may change. It should be understood that, at a specific moment, it is allowed to transmit parameter information of only one basic service set in the wireless local area network. Therefore, description about a specific access point in this embodiment of the present invention is for a specific moment. Actually, at another moment, the receiving unit 21 of the access point 20 may also receive parameter information sent by the different access point. For ease of description, in this embodiment of the present invention, only a case in which parameter information sent by one access point is received at a specific moment is described.

It should be understood that the parameter information sent by the another access point may include at least one of the following parameters that can indicate the current channel occupation status of the basic service set in which the another access point is located, for example, a quantity of active nodes in the basic service set in which the another access point is located, or transmit power of a station in the basic service set in which the another access point is located. That is, the adjustment unit 22 may adjust the CCA threshold of the access point 20 according to at least one parameter. It should be understood that, when the quantity of active nodes in the basic service set in which the another access point is located changes, the parameter information sent by the another access point may include a quantity of currently active nodes in the basic service set in which the another access point is located.

Optionally, in this embodiment of the present invention, a method used by the adjustment unit 22 to adjust the CCA threshold of the access point according to the parameter information sent by the another access point is not limited. All methods that require the access point to adjust the CCA threshold of the access point according to the parameter information sent by the another access point fall within this embodiment of the present invention. For example, the access point in this embodiment of the present invention may perform an operation according to the parameter information sent by the another access point, based on different adjustment algorithms, and by using the parameter information sent by the another access point as input, to obtain a new CCA threshold. The access point may adjust the CCA threshold of the access point to the new CCA threshold. Alternatively, the access point in this embodiment of the present invention may determine an adjustment granularity of the CCA threshold according to the parameter information sent by the another access point, and may increase or reduce the CCA threshold of the access point for multiple times according to the adjustment granularity of the CCA threshold, so that normal communication may finally be performed between the access point and a station that are in the basic service set.

Optionally, in another embodiment, if some access points in multiple access points that receive the parameter information sent by the another access point determine that the parameter information sent by the another access point is not enough for affecting CCA thresholds of these access points, adjustment units of these access points may set adjustment values of the CCA thresholds to zero, that is, the CCA thresholds of these access points may remain unchanged.

Optionally, in another embodiment, the adjustment unit 22 may adjust the CCA threshold of the access point 20 according to the parameter information sent by the another access point and parameter information that is corresponding to the parameter information sent by the another access point and that is of the basic service set in which the access point 20 is located.

Specifically, a category of the parameter information sent by the another access point may be the same as a category of the parameter information that is corresponding to the parameter information sent by the another access point and that is of the basic service set in which the access point is located. For example, the parameter information sent by the another access point may include the quantity of active nodes in the basic service set in which the another access point is located, and transmit power of a station. Accordingly, the parameter information that is corresponding to the parameter information sent by the another access point and that is of the basic service set in which the access point is located may also include a quantity of active nodes in the basic service set in which the access point is located, and transmit power of a station.

Optionally, in another embodiment, the access point 20 in this embodiment of the present invention may compare the parameter information sent by the another access point with the parameter information that is corresponding to the parameter information sent by the another access point and that is of the basic service set in which the access point is located, and adjust the CCA threshold of the access point 20 according to a comparison result; or the access point 20 may perform an algorithm operation on the parameter information sent by the another access point and the parameter information that is corresponding to the parameter information sent by the another access point and that is of the basic service set in which the access point is located, and adjust the CCA threshold of the access point 20 according to an operation result. It should be understood that, in this embodiment of the present invention, a method for adjusting the CCA threshold of the access point 20 according to the parameter information sent by the another access point and the parameter information that is corresponding to the parameter information sent by the another access point and that is of the basic service set in which the access point is located is not limited.

Optionally, in another embodiment, the parameter information sent by the another access point may include the quantity of active nodes in the basic service set in which the another access point is located. The basic service set in which the access point 20 is located is the basic service set in which the access point is located. It should be understood that the basic service set may include an adding threshold for active nodes and a reduction threshold for active nodes. When a quantity of added active nodes exceeds the adding threshold or a quantity of reduced active nodes exceeds the reduction threshold, the quantity of active nodes affects the CCA threshold of the access point or a CCA threshold of a different access point. In this embodiment of the present invention, the adjustment unit 22 may increase the CCA threshold of the access point 20 when the quantity of active nodes in the basic service set in which the another access point is located is greater than the quantity of active nodes in the basic service set in which the access point is located. The adjustment unit 22 may reduce the CCA threshold of the access point 20 when the quantity of active nodes in the basic service set in which the another access point is located is less than the quantity of active nodes in the basic service set in which the access point is located.

Optionally, in another embodiment, the access point 20 may determine the adjustment granularity of the CCA threshold according to a difference between the quantity of active nodes in the basic service set in which the another access point is located and the quantity of active nodes in the basic service set in which the access point is located. The adjustment unit 22 may increase or reduce the CCA threshold of the access point 20 based on the adjustment granularity of the CCA threshold.

It should be understood that, when a quantity of active nodes of the different access point increases, the active nodes may occupy a majority of channels. If the access point continues using the original CCA threshold, a result of a CCA method shows that a channel is in a busy state. In this case, the access point needs to increase the CCA threshold of the access point, so that the result of the CCA method shows that a channel is in a idle state, to ensure normal communication between the access point and a station. On the contrary, when a quantity of active nodes of the different access point decreases, the access point may reduce the CCA threshold of the access point.

Optionally, in another embodiment, the access point 20 may further refer to other parameter information when adjusting the CCA threshold of the access point according to change in the quantity of active nodes. The adjustment unit 22 may adjust the CCA threshold of the access point 20 according to the parameter information sent by the another access point and the other parameter information. Optionally, the other parameter information may include at least one piece of the following information: a location of a station in the basic service set in which the access point is located, transmit power of a station in the basic service set in which the access point is located, or a path loss of the basic service set in which the access point is located. It should be understood that the path loss may be each path loss of each link in the basic service set, or may be a sum of path losses of all links in the basic service set.

Specifically, by comparing the quantity of active nodes in the basic service set in which the another access point is located and the quantity of active nodes in the basic service set in which the access point is located, the adjustment unit 22 may qualitatively determine to increase or reduce the CCA threshold of the access point 20. Optionally, in this embodiment of the present invention, the adjustment unit 22 may refer to other parameter information when qualitatively increasing or reducing the CCA threshold of the access point 20. That is, the adjustment unit 22 may also quantitatively adjust the CCA threshold of the access point with reference to the other parameter information.

Optionally, in another embodiment, the adjustment unit 22 may quantitatively adjust the CCA threshold of the access point according to the location of the station in the basic service set in which the access point is located. A longer distance between the access point and the station in the basic service set indicates a lower CCA threshold, that is, a greater adjustment value for reducing the CCA threshold. A shorter distance between the access point and the station in the basic service set indicates a greater CCA threshold, that is, a greater adjustment value for increasing the CCA threshold.

Optionally, in another embodiment, the adjustment unit 22 may quantitatively adjust the CCA threshold of the access point according to the transmit power of the station in the basic service set in which the access point is located. Smaller transmit power of the access point and the station in the basic service set indicates a lower CCA threshold, that is, a greater adjustment value for reducing the CCA threshold. Greater transmit power of the access point and the station in the basic service set indicates a greater CCA threshold, that is, a greater adjustment value for increasing the CCA threshold.

Optionally, in another embodiment, the adjustment unit 22 may quantitatively adjust the CCA threshold of the access point according to the path loss of the basic service set in which the access point is located. A smaller path loss of the basic service set indicates a greater CCA threshold, that is, a greater adjustment value for increasing the CCA threshold. Larger path losses of the access point and the station in the basic service set indicate a lower CCA threshold, that is, a greater adjustment value for reducing the CCA threshold.

Optionally, the access point may calculate a new CCA threshold of the access point according to the other parameter information by using an algorithm. It should be understood that, for a specific value to which the CCA threshold is adjusted, different thresholds may be obtained by using different algorithms and adjustment methods. In this embodiment of the present invention, a specific method used by the access point to adjust the CCA threshold of the access point to a specific threshold is not limited.

Optionally, in another embodiment, the receiving unit 21 may be further configured to receive a CCA threshold of the another access point sent by the another access point, and the adjustment unit 22 may be specifically configured to adjust the CCA threshold of the access point 20 according to the parameter information and the CCA threshold of the another access point that are sent by the another access point. It should be understood that the adjustment unit 22 may also refer to the CCA threshold of the another access point when adjusting the CCA threshold of the access point according to the parameter information sent by the another access point.

It should be understood that the another access point is similar to the access point 20. Therefore, similar to the access point 20, the another access point may also adjust the CCA threshold of the another access point. A method used by the another access point to adjust the CCA threshold of the another access point may be the same as a method used by the access point 20 to adjust the CCA threshold of the access point 20. Before the access point 20 adjusts the CCA threshold, the another access point may adjust the CCA threshold of the another access point at another moment according to the method used by the access point 20. Therefore, the CCA threshold, included in the parameter information sent by the another access point, of the another access point may be the CCA threshold adjusted at the another moment.

In this embodiment of the present invention, an access point may adjust a CCA threshold of the access point according to a CCA threshold of a different access point and parameter information that is of the different access point and that indicates a channel occupation status. More reference information may be obtained based on the parameter information and the CCA threshold that are of the different access point, so that accuracy of adjusting the CCA threshold of the access point is improved.

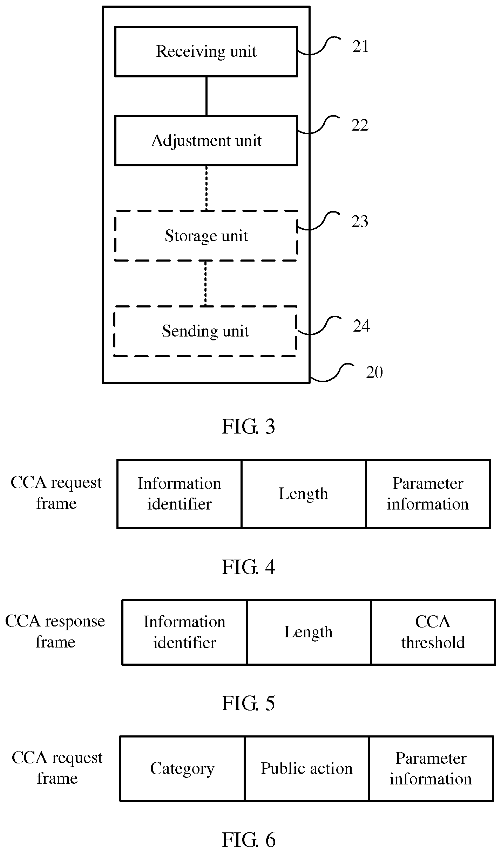

FIG. 3 is a block diagram of an access point according to another embodiment of the present invention. As shown in FIG. 3, the access point 20 may further include a storage unit 23. For ease of understanding, in FIG. 3, a same device as that in FIG. 2 uses a name and a reference numeral that are the same as those of the device in FIG. 2.

The storage unit 23 is configured to store a CCA list, where the CCA list includes identification information of a neighboring access point of the access point, a CCA threshold of the neighboring access point, and parameter information that indicates a current channel occupation status of a basic service set in which the neighboring access point is located.

It should be understood that a person of ordinary skill in the art may learn that the neighboring access point of the access point may be an access point that can sense information sent by the access point and that is in the different access points than the access point. The access point in this embodiment of the present invention may receive information sent by another access point, and the another access point may be an access point in neighboring access points.

Therefore, the access point 20 stores the parameter information sent by the another access point and received by the receiving unit 21 in the CCA list. It can be learned from the foregoing description that, when parameter information and CCA thresholds of multiple access points change, the changed parameter information and the changed CCA thresholds may be separately sent to other access points at different moments. Therefore, the CCA list may include current parameter information and current CCA thresholds of multiple access points. That is, when parameter information and a CCA threshold of a neighboring access point change, the neighboring access point may send the current parameter information and the current CCA threshold to a different access point in a way similar to that of the another access point.

It may be learned that the access point 20 may store, in the CCA list, the parameter information sent by the another access point, or may record, in the CCA list, parameter information and the CCA threshold of the different access point. In the CCA list, CCA thresholds of neighboring access points may include changed CCA thresholds of some access points in the neighboring access points, or may include unchanged CCA thresholds of remaining access points. In the CCA list, parameter information of neighboring access points may include changed parameter information of some access points in the neighboring access points, or may include unchanged parameter information of remaining access points.

Specifically, each access point in multiple basic service sets may have a CCA list. In the CCA list, identification information of neighboring access points may be used to identify different access points. In the CCA list, a CCA threshold of the neighboring access point and parameter information of the neighboring access point may include information received by the receiving unit 21 from the another access point and the different access point.

Optionally, in another embodiment, the adjustment unit 22 may adjust the CCA threshold of the access point 20 according to a change of the CCA list.

Specifically, in an embodiment, the adjustment unit 22 of the access point 20 may adjust the CCA threshold of the access point 20 based on some changed parameter information in the CCA list. For example, the adjustment unit 22 may adjust the CCA threshold according to a quantity of changed active nodes, and may adjust the CCA threshold of the access point 20 with reference to information such as a location of a station in the basic service set in which the access point 20 is located, transmit power of a station in the basic service set, or a path loss of the basic service set.

Optionally, in another embodiment, the adjustment unit 22 may quantitatively adjust the CCA threshold of the access point according to the location of the station in the basic service set in which the access point is located. A longer distance between the access point and the station in the basic service set indicates a lower CCA threshold, that is, a greater adjustment value for reducing the CCA threshold. A shorter distance between the access point and the station in the basic service set indicates a greater CCA threshold, that is, a greater adjustment value for increasing the CCA threshold.

Optionally, in another embodiment, the adjustment unit 22 may quantitatively adjust the CCA threshold of the access point according to the transmit power of the station in the basic service set in which the access point is located. Smaller transmit power of the access point and the station in the basic service set indicates a lower CCA threshold, that is, a greater adjustment value for reducing the CCA threshold. Greater transmit power of the access point and the station in the basic service set indicates a greater CCA threshold, that is, a greater adjustment value for increasing the CCA threshold.

Optionally, in another embodiment, the adjustment unit 22 may quantitatively adjust the CCA threshold of the access point according to the path loss of the basic service set in which the access point is located. A smaller path loss of the basic service set indicates a greater CCA threshold, that is, a greater adjustment value for increasing the CCA threshold. Larger path losses of the access point and the station in the basic service set indicate a lower CCA threshold, that is, a greater adjustment value for reducing the CCA threshold.

Optionally, in another embodiment, the adjustment unit 22 of the access point 20 in this embodiment of the present invention may also use some changed CCA thresholds in the CCA list as a determining criterion. For example, if a changed CCA threshold that is of the neighboring access point and that is in the CCA list is greater than the CCA threshold of the access point 20, the adjustment unit 22 may increase the CCA threshold of the access point 20; or if a changed CCA threshold that is of the neighboring access point and that is in the CCA list is less than the CCA threshold of the access point 20, the adjustment unit 22 may reduce the CCA threshold of the access point 20.

Optionally, in another embodiment, the adjustment unit 22 may also adjust the CCA threshold of the access point 20 based on both changed parameter information and a changed CCA threshold. For example, the adjustment unit 22 of the access point 20 may qualitatively increase or reduce the CCA threshold based on changed parameter information in the CCA list, and then quantitatively determine, with reference to a changed CCA threshold in the CCA list, a specific value to which the CCA threshold is increased or reduced.

Optionally, in another embodiment, the adjustment unit 22 in this embodiment of the present invention may calculate a new CCA threshold of the access point 20 based on a specific algorithm by using both changed parameter information and a changed CCA threshold as input values, and then adjust the CCA threshold of the access point 20 to the new CCA threshold.

Optionally, in another embodiment, the adjustment unit 22 of the access point 20 in this embodiment of the present invention may also calculate a new CCA threshold of the access point 20 based on a specific algorithm by using parameter information of all neighboring access points and CCA thresholds of all neighboring access points as input values, and adjust the CCA threshold of the access point 20 to the new CCA threshold, where the parameter information and the CCA thresholds are in the CCA list. Optionally, in this embodiment of the present invention, a method used by the access point to adjust the CCA threshold of the access point is not limited thereto.

Optionally, in another embodiment, the access point 20 may further include a sending unit 24. The sending unit 24 is configured to send the adjusted CCA threshold of the access point 20 to the neighboring access point of the access point 20.

After each access point in the basic service set adjusts a CCA threshold of the access point, the access point may send the adjusted CCA threshold to a neighboring access point of the access point. The neighboring access point receives the adjusted CCA threshold, and stores the adjusted CCA threshold in a CCA list of the neighboring access point. Changed CCA thresholds sent by multiple access points and received by each access point in the neighboring access point at different moments may form a CCA threshold that is of a neighboring access point and that is in a CCA list of the access point.

Specifically, the CCA list may include the CCA threshold of the neighboring access point and the parameter information of the neighboring access point. The sending unit 24 of the access point 20 may send the adjusted CCA threshold to the neighboring access points, and each access point in the neighboring access point stores the adjusted CCA threshold in a CCA list of the access point. At another moment, each access point in the neighboring access point may further receive parameter information sent by a different access point. Therefore, the CCA threshold and the parameter information constitute the CCA threshold that is of the neighboring access point and that is in the CCA list of each access point.

In this embodiment of the present invention, an access point adjusts a CCA threshold of the access point according to parameter information and a CCA threshold that are sent by a neighboring access point, thereby improving accuracy of adjusting the CCA threshold. In this embodiment of the present invention, the CCA threshold of the access point can be adjusted dynamically and accurately, and communication efficiency is improved.

Optionally, in another embodiment, the sending unit 24 of the access point 20 may further send indication information to the station in the basic service set in which the access point is located, and the indication information is used to instruct the station to adjust a CCA threshold of the station according to the indication information.

Referring to FIG. 1, there are multiple basic service sets in a network. After the CCA threshold of the access point is adjusted in this embodiment of the present invention, a CCA threshold of a station in the basic service set in which the access point is located may be further adjusted. It should be understood that, after an access point in each basic service set in the network adjusts a CCA threshold of the access point, the access point may adjust a CCA threshold of a station in a basic service set in which the access point is located.

Referring to FIG. 1, there are multiple stations in the basic service set. It should be understood that the access point in this embodiment of the present invention may adjust CCA thresholds of all stations in the basic service set, or may adjust CCA thresholds of some stations in the basic service set, which is not limited thereto in the present invention.

Optionally, in an embodiment, the access point 20 in this embodiment of the present invention may determine new CCA thresholds of all stations or some stations according to the adjusted CCA threshold of the access point 20, and adjust the CCA thresholds of all stations or some stations to the new CCA thresholds.

Optionally, in another embodiment, in some special circumstances, the access point 20 may further adjust CCA thresholds of individual stations, so that the individual station can communicate concurrently. In this embodiment of the present invention, a method used by the access point to adjust the CCA threshold of the station is not limited.

Optionally, the indication information may be denoted by a data frame. The sending unit 24 may send the indication information to the station in the basic service set in which the access point 20 is located. The indication information may include a new CCA threshold to which the station needs to be adjusted. The station may adjust the CCA threshold of the station to the new CCA threshold according to the indication information.

Optionally, in another embodiment, the access point 20 may use the adjusted CCA threshold of the access point 20 as a new CCA threshold of the station in the basic service set in which the access point is located. The indication information may include the adjusted CCA threshold of the access point 20. In this case, all stations in the basic service set in which the access point 20 is located may adjust CCA thresholds of all the stations to the adjusted CCA threshold of the access point 20.

In this embodiment of the present invention, an access point adjusts a CCA threshold of the access point according to parameter information and a CCA threshold that are sent by a different access point. Therefore, the access point can adjust the CCA threshold of the access point dynamically, and communication efficiency is improved.

In addition, the access point in this embodiment of the present invention may adjust the CCA threshold of the access point between basic service sets, and may also adjust a CCA threshold of a station within the basic service set. In this way, by hierarchically adjusting CCA thresholds of all nodes in a network, the access point can run a complex adjustment algorithm only on the access point, and the station only needs to collaborate with the access point in adjusting the CCA threshold. This embodiment of the present invention can reduce operation overheads and improve flexibility and accuracy of a process of adjusting a CCA threshold of a node.

Optionally, in another embodiment, the receiving unit 21 may receive a CCA request frame sent by the another access point, and the CCA request frame includes the parameter information sent by the another access point.

Optionally, in another embodiment, the CCA request frame received by the receiving unit 21 may be carried in an access network query protocol element (ANQP element) or a public action frame.

In the following, a format of the CCA request frame is described with reference to FIG. 4.

FIG. 4 is a schematic diagram of a CCA request frame according to an embodiment of the present invention.

An access network query protocol element may include an information identifier (Info ID) field, a length field, and an information field. Optionally, in an embodiment, as shown in FIG. 4, the CCA request frame may also include an information identifier field, a length field, and a parameter information field that indicates a channel occupation status of a basic service set of a neighboring access point. The information field in the access network query protocol element may be corresponding to the parameter information field in the CCA request frame. In this embodiment of the present invention, the parameter information field in the CCA request frame may be used to carry parameter information sent by another access point.

The information identifier field may occupy two bytes. For the CCA request frame, the information identifier field may be a value that has not been used. For example, a value of the information identifier field may be 254. When the value of the information identifier field is 254, it indicates that the frame is a CCA request frame. The length field may occupy two bytes. The length field may be used to indicate a length of the frame. A quantity of bytes occupied by the parameter information field may be fixed or variable. For example, when the parameter information sent by the another access point and carried in the parameter information field is a quantity of active nodes, a length of the parameter information field may be 2 bytes. It should be understood that, when the parameter information sent by the another access point and carried in the parameter information field is another parameter, the length of the parameter information field may be another quantity of bytes.

Optionally, in another embodiment, the sending unit 24 may send a CCA response frame to a neighboring access point of the access point 20, and the CCA response frame includes the adjusted CCA threshold of the access point 20.

Optionally, in another embodiment, the CCA response frame sent by the sending unit 24 may be carried in an access network query protocol element or a public action frame.

In the following, a format of the CCA response frame is described with reference to FIG. 5.

FIG. 5 is a schematic diagram of a CCA response frame according to an embodiment of the present invention.

An access network query protocol element may include an information identifier (Info ID) field, a length field, and an information field. Optionally, in an embodiment, as shown in FIG. 5, the CCA response frame may also include an information identifier field, a length field, and a CCA threshold field. The information field in the access network query protocol element may be corresponding to the CCA threshold field in the CCA response frame. In this embodiment of the present invention, the CCA threshold field may be used to carry an adjusted CCA threshold of an access point.

The information identifier field may occupy two bytes. For the CCA response frame, the information identifier field may be a value that has not been used. For example, a value of the information identifier field may be 255. That is, when the value of the information identifier field is 255, it indicates that the frame is a CCA response frame. The length field may occupy two bytes. The length field may be used to indicate a length of the frame. A quantity of bytes occupied by the CCA threshold field may be fixed or variable. A quantity of bytes occupied by the CCA threshold field is different when a different quantization manner is used.

Table 1 is a CCA threshold quantization table.

**Table 1 CCA threshold quantization table**

| **CCA threshold** | **CCA quantization** |
|---|---|
| -79 dBm | 000 |
| -76 dBm | 001 |
| -73 dBm | 010 |
| -70 dBm | 011 |
| -67 dBm | 100 |
| -64 dBm | 101 |
| -61 dBm | 110 |
| -58 dBm | 111 |

As shown in Table 1, an adjustment range of a CCA threshold in this embodiment of the present invention may be given as [-82 dBm, -58 dBm], and an adjustment granularity of the CCA threshold may be 3 dB. If a quantization manner shown in Table 1 is used, the CCA threshold field may occupy 3 bits. Optionally, a process of quantizing the CCA threshold is not limited in this embodiment of the present invention. The adjustment range of the CCA threshold may be another range, and the adjustment granularity of the CCA threshold may also be another value. If the adjustment range of the CCA threshold and the adjustment granularity of the CCA threshold change, a quantity of bitsthat can be occupied by the CCA threshold field changes accordingly.

In this embodiment of the present invention, the CCA request frame and the CCA response frame are carried in an existing access network query protocol element, which simplifies an operation and is easy to implement.

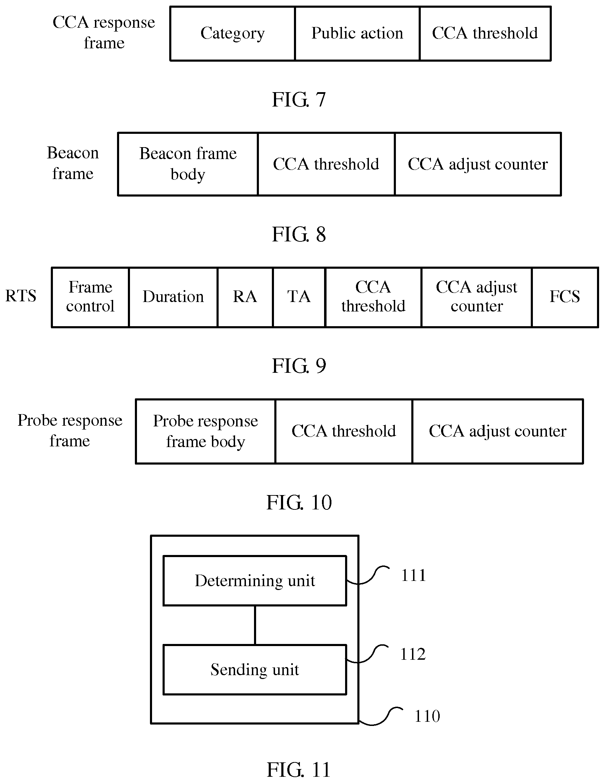

Optionally, in another embodiment, the CCA request frame received by the receiving unit 21 or the CCA response frame sent by the sending unit 24 may be carried in a public action frame. In the following, the CCA request frame and the CCA response frame are respectively described in detail with reference to FIG. 6 and FIG. 7.

FIG. 6 is a schematic diagram of a CCA request frame according to another embodiment of the present invention.

A public action frame includes a categoryfield and an action details field. The action details field may be subdivided into multiple fields. The category field occupies 1 byte. Optionally, in an embodiment, as shown in FIG. 6, the CCA request frame may include a category field, a public action field, and a parameter information field. The parameter information field may be used to carry parameter information sent by another access point.

For the CCA request frame, a value of the category field may be 4, and a value of the public action field may be 16. When the value of the public action field is 16, it may be considered that the frame is a CCA response frame. A quantity of bytes occupied by the parameter information field may be fixed or variable. For example, when the parameter information sent by the another access point and carried in the parameter information field is a quantity of active nodes, a length of the parameter information field may be 2 bytes. It should be understood that, when the parameter information sent by the another access point and carried in the parameter information field is another parameter, the length of the parameter information field may be another quantity of bytes.

FIG. 7 is a schematic diagram of a CCA response frame according to another embodiment of the present invention.

A public action frame includes a category field and an action details field. The action details field may be subdivided into multiple fields. The category field occupies 1 byte. Optionally, in an embodiment, as shown in FIG. 7, the CCA response frame may include a category field, a public action field, and a CCA threshold field. The CCA threshold field may be used to carry an adjusted CCA threshold of an access point.

For the CCA response frame, a value of the category field may be 4, and the public action field may be another value that has not been used. If a value of the public action field is this value, it may be considered that the frame is a CCA response frame. A quantity of bytes occupied by the CCA threshold field may be fixed or variable. A quantity of bytes occupied by the CCA threshold field is different when a different quantization manner is used. If a quantization manner in the foregoing Table 1 is used, the CCA threshold field may occupy 3 bits. A quantity of bytes occupied by the CCA threshold field is different when a different quantization manner is used. That is, if an adjustment range of the CCA threshold and an adjustment granularity of the CCA threshold change, a quantity of bits that can be occupied by the CCA threshold field changes accordingly.

Optionally, in another embodiment, the indication information sent by the sending unit 24 may be carried in a beacon frame, a request to send frame, or a probe response frame.

The access point may collectively adjust CCA thresholds of all stations in a first service set, or individually adjust CCA thresholds of some stations, and the present invention is not limited thereto. A station may receive the indication information, and adjust a CCA threshold of the station according to the CCA threshold included in the indication information.

Optionally, in another embodiment, the beacon frame, the request to send Request To Send(RTS) frame, or the probe response frame may include a CCA adjust counter field. The station may adjust the CCA threshold of the station at a specified time according to the CCA adjust counter field included in the beacon frame, the request to send frame, or the probe response frame.

The following describes in detail, with reference to FIG. 8 to FIG. 10, cases in which the indication information is carried in different data frames.

FIG. 8 is a schematic diagram of a beacon frame according to an embodiment of the present invention.

As shown in FIG. 8, the beacon frame may include a beacon frame body field and a CCA threshold field. Optionally, the CCA threshold field may be placed at a frame end of the beacon frame.

Optionally, in another embodiment, the beacon frame may further include a CCA adjust counter field. The CCA adjust counter field may be located beside the CCA threshold field, or placed at a frame end of the beacon frame.

FIG. 9 is a schematic diagram of a request to send frame according to an embodiment of the present invention.

As shown in FIG. 9, the RTS frame may include a frame control field, a duration field, a receiver address (RA) field, a transmitter address (TA) field, a frame check sequence (FCS) field, and a CCA threshold field. Optionally, the CCA threshold field may be placed between any two fields in the RTS frame, for example, between the TA field and the FCS field, or placed at a frame end of the RTS frame. A location of the CCA threshold field in the RTS frame is not limited in this embodiment of the present invention.

Optionally, in another embodiment, the RTS frame may further include a CCA adjust counter field. The CCA adjust counter field may be located beside the CCA threshold field, or placed in another location in the RTS frame, and the present invention is not limited thereto.

FIG. 10 is a schematic diagram of a probe response frame according to an embodiment of the present invention.

As shown in FIG. 10, the probe response frame may include a probe response frame body field and a CCA threshold field. Optionally, in another embodiment, the CCA threshold field may be placed at a frame end of the probe response frame.

Optionally, in another embodiment, the probe response frame may further include a CCA adjust counter field. The CCA adjust counter field may be located beside the CCA threshold field.

It should be understood that the CCA adjust counter field included in FIG. 8 to FIG. 10 is used to instruct a station to adjust a CCA threshold at an indicated time. To ensure station synchronization, a proper value may be set for the CCA adjust counter field. For example, if a value of the CCA adjust counter field in the beacon frame shown in FIG. 8 is given as 5, the station needs to adjust the CCA threshold of the station after the fifth beacon frame after the current beacon frame is received. Therefore, the station may include a timer module that is configured to adjust the CCA threshold of the station at a specified time according to the CCA adjust counter field, so that multiple stations can perform adjustment synchronously.

FIG. 11 is a block diagram of an access point according to an embodiment of the present invention. As shown in FIG. 11, an access point 110 may interact with the access point 20 in FIG. 2. The access point 110 may include a determining unit 111 and a sending unit 112.

The determining unit 111 is configured to determine parameter information, where the parameter information indicates a current channel occupation status of a basic service set in which the access point 110 is located.

The sending unit 112 is configured to send the parameter information to a different access point.

In this embodiment of the present invention, the access point sends, to the different access point, the parameter information that indicates the current channel occupation status of the basic service set in which the access point is located, so that the different access point adjusts a CCA threshold of the different access point according to the parameter information.

It should be understood that a basic service set may include one access point. A wireless local area network may include multiple basic service sets and multiple corresponding access points. In this embodiment of the present invention, only a specific access point in the multiple access points is described. It should be understood that each access point in the wireless local area network may send, to a different access point, parameter information that indicates a current channel occupation status of a basic service set in which the access point is located.

A part of parameter information in the parameter information included in the basic service set in which the access point 110 is located may affect a CCA threshold of a different access point. Because the CCA threshold may be used to access a channel occupation status, the part of parameter information may be used to indicate the current channel occupation status of the basic service set. Specifically, the access point 110 may send the currently changed parameter information to the different access point when the parameter information changes.

In the wireless local area network, multiple pieces of parameter information of multiple basic service sets may change. It should be understood that, at a specific moment, it is allowed to transmit parameter information of only one basic service set in the wireless local area network. Therefore, in this embodiment of the present invention, description about a specific access point is for a specific moment. Actually, at another moment, another access point may also send parameter information to a different access point. For ease of description, in this embodiment of the present invention, only a case in which one access point sends parameter information at a specific moment is described.

Optionally, the parameter information may include a quantity of active nodes in the basic service set in which the access point 110 is located, and the determining unit 111 is specifically configured to: when a quantity of added active nodes or reduced active nodes in the basic service set exceeds a threshold, determine that the quantity of active nodes in the basic service set is the parameter information. It should be understood that, when the quantity of active nodes in the basic service set changes, the parameter information may include a quantity of currently active nodes in the basic service set.

It should be understood that the parameter information of the basic service set may include at least one of the following parameters that can indicate the current channel occupation status of the basic service set, for example, the quantity of active nodes in the basic service set, and transmit power of a station in the basic service set.

After receiving the parameter information, the different access point may adjust a CCA threshold of the different access point according to the parameter information.

Optionally, in another embodiment, the parameter information sent by the sending unit 112 may include the quantity of active nodes in the basic service set.

It should be understood that the basic service set may include an adding threshold for active nodes and a reduction threshold for active nodes. When a quantity of added active nodes exceeds the adding threshold or a quantity of reduced active nodes exceeds the reduction threshold, the quantity of active nodes affects the CCA threshold of the access point or a CCA threshold of a different access point. Optionally, in another embodiment, when a quantity of added active nodes exceeds the adding threshold or a quantity of reduced active nodes exceeds the reduction threshold, the access point 110 in this embodiment of the present invention may trigger the sending unit 112 to send a changed quantity of active nodes.

Optionally, in another embodiment, the sending unit 112 is further configured to send a CCA threshold of the access point 110 to the different access point.

It should be understood that at another moment, the access point 110 may also adjust the CCA threshold of the access point 110 according to parameter information sent by the different access point. An adjustment method may be the same as a method for adjusting the CCA threshold by the access point involved in FIG. 2 to FIG. 10. If the CCA threshold of the access point 110 changes, the sending unit 112 may further send the changed CCA threshold of the access point 110. If the CCA threshold of the access point 110 does not change, the sending unit 112 may further send the currently unchanged CCA threshold.

Optionally, in another embodiment, the sending unit 112 may send a CCA response frame to the different access points, and the CCA response frame may include the CCA threshold of the access point 110.

Optionally, in another embodiment, the CCA response frame sent by the sending unit 112 may be carried in an access network query protocol element or a public action frame.

Description about the CCA response frame in this embodiment of the present invention is applicable to the description about the CCA response frame in FIG. 5 and FIG. 7. To avoid repetition, the description is not provided herein again.

Optionally, in another embodiment, the sending unit 112 may be further configured to send a CCA request frame to the different access point, and the CCA request frame may include the parameter information.

Optionally, in another embodiment, the CCA request frame sent by the sending unit 112 may be carried in an access network query protocol element or a public action frame.

Description about the CCA request frame in this embodiment of the present invention is applicable to the description about the CCA request frame in FIG. 4 and FIG. 6. To avoid repetition, the description is not provided herein again.

Optionally, in this embodiment of the present invention, the access point 20 may further dynamically adjust a CCA threshold of a station in the basic service set in which the access point is located.

In the following, the station in the basic service set is described in detail.

The station may include a receiving unit and an adjustment unit.

The receiving unit is configured to receive indication information of the access point 20, and the indication information is used to instruct the station to adjust the CCA threshold of the station according to the indication information.

The adjustment unit is configured to adjust the CCA threshold of the station according to the indication information.

The station in this embodiment of the present invention only needs to collaborate with the access point in adjusting the CCA threshold. This embodiment of the present invention can reduce overheads and improve flexibility and accuracy of a process of adjusting a CCA threshold of a node.

There are multiple stations in the basic service set. It should be understood that the access point in this embodiment of the present invention may adjust CCA thresholds of all stations in the basic service set, or may adjust CCA thresholds of some stations in all stations.

Optionally, in another embodiment, the indication information may include a new CCA threshold that is determined by the access point 20 according to the adjusted CCA threshold of the access point 20. The station may adjust the CCA threshold of the station to the new CCA threshold according to the indication information.

Optionally, in another embodiment, the indication information may include the adjusted CCA threshold of the access point 20. That is, the access point 20 uses the adjusted CCA threshold of the access point 20 as the new CCA threshold of the station. In this way, the station may adjust the CCA threshold of the station to the adjusted CCA threshold of the access point 20 according to the indication information.

In addition, in a special circumstance, the access point 20 may adjust CCA thresholds of individual stations, so that the individual stations can communicate concurrently.

Optionally, in another embodiment, the indication information received by the receiving unit of the station may be carried in a beacon frame, a request to send frame, or a probe response frame.

Specifically, the beacon frame, the request to send frame, or the probe response frame may carry the new CCA threshold of the station in the indication information. A format of the beacon frame, the request to send frame, or the probe response frame may be description in FIG. 8 to FIG. 10 about the beacon frame, the request to send frame, or the probe response frame. To avoid repetition, details are not described herein.

Optionally, in another embodiment, the beacon frame, the request to send frame, or the probe response frame may include a CCA adjust counter field.

In another embodiment of this embodiment of the present invention, the station may further include a timer unit.

The timer unit may adjust the CCA threshold of the station at a specified time according to the CCA counter field.

It should be understood that the CCA adjust counter field in FIG. 8 to FIG. 10 is used to instruct the station to adjust the CCA threshold at an indicated time. To ensure station synchronization, a proper value may be set for the CCA adjust counter field in this embodiment of the present invention. For example, if a value of the CCA adjust counter field in the beacon frame shown in FIG. 8 is given as 5, the station needs to adjust the CCA threshold of the station after the fifth beacon frame after the current beacon frame is received. Therefore, the timer unit of the station may adjust the CCA threshold of the station at a specified time according to the CCA adjust counter field, so that multiple stations can perform adjustment synchronously.

In this embodiment of the present invention, an access point adjusts a CCA threshold of the access point according to parameter information and a CCA threshold that are sent by a different access point. Therefore, the access point can adjust the CCA threshold of the access point dynamically, and communication efficiency is improved.

In addition, the access point in this embodiment of the present invention may adjust the CCA threshold of the access point between basic service sets, and may also adjust a CCA threshold of a station within the basic service set. In this way, by using a method of hierarchically adjusting CCA thresholds of all nodes in a network, the access point can run a complex adjustment algorithm only on the access point, and the station only needs to collaborate with the access point in adjusting the CCA threshold. This embodiment of the present invention can reduce overheads and improve flexibility and accuracy of a process of adjusting a CCA threshold of a node.

The access point and the station that adjust CCA thresholds are described above. In the following, a method in an embodiment of the present invention is described with reference to specific embodiments.

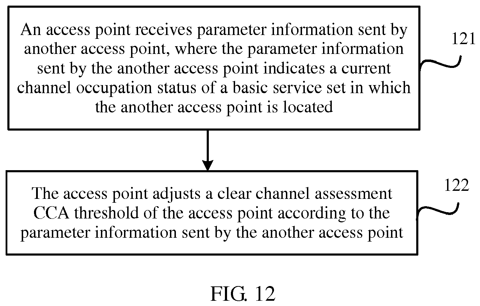

FIG. 12 is a schematic flowchart of a method for adjusting a clear channel assessment CCA threshold according to an embodiment of the present invention. The method shown in FIG. 12 may be performed by the access point 20 involved in FIG. 2 to FIG. 10. As shown in FIG. 12, the method may include the following steps:
121. An access point receives parameter information sent by another access point, where the parameter information sent by the another access point indicates a current channel occupation status of a basic service set in which the another access point is located.
122. The access point adjusts a clear channel assessment CCA threshold of the access point according to the parameter information sent by the another access point.

In this embodiment of the present invention, an access point adjusts a CCA threshold of the access point according to parameter information that is sent by a different access point and that indicates a channel occupation status. Therefore, the CCA threshold of the access point can be adjusted dynamically, and communication efficiency is improved.

The method in FIG. 12 may be implemented by the access point involved in FIG. 2 to FIG. 10. To avoid repetition, details are not described herein.

Optionally, in another embodiment, the parameter information sent by the another access point may include a quantity of active nodes in the basic service set in which the another access point is located, and the adjusting, by the access point, a CCA threshold of the access point according to the parameter information sent by the another access point may include:
increasing, by the access point, the CCA threshold of the access point when the quantity of active nodes in the basic service set in which the another access point is located is greater than a quantity of active nodes in a basic service set in which the access point is located; or reducing, by the access point, the CCA threshold of the access point when the quantity of active nodes in the basic service set in which the another access point is located is less than a quantity of active nodes in a basic service set in which the access point is located.

Optionally, in another embodiment, the access point may adjust the CCA threshold of the access point according to the parameter information sent by the another access point and other parameter information, and the other parameter information may include at least one piece of the following information: a location of a station in the basic service set in which the access point is located, transmit power of a station in the basic service set in which the access point is located, or a path loss of the basic service set in which the access point is located.

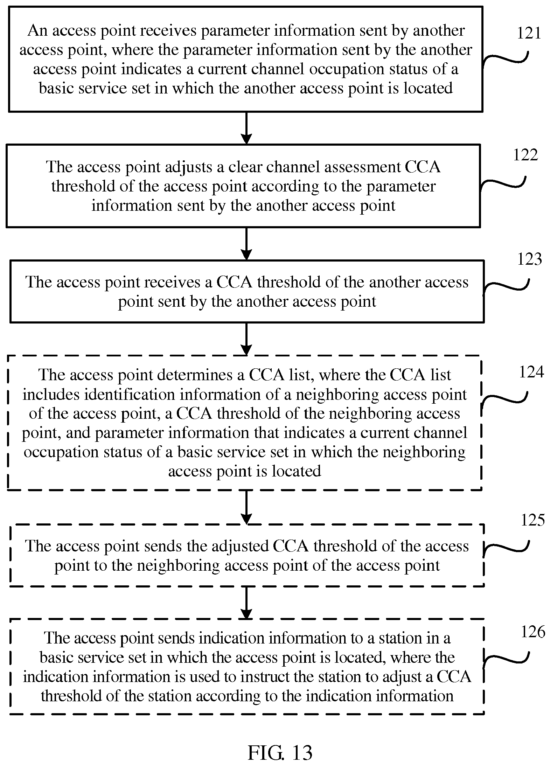

FIG. 13 is a schematic flowchart of a method for adjusting a CCA threshold according to another embodiment of the present invention. As shown in FIG. 13, the method may further include the following step:
123. The access point receives a CCA threshold of the another access point sent by the another access point.

The access point may adjust the CCA threshold of the access point according to the parameter information and the CCA threshold of the another access point that are sent by the another access point.

Optionally, in another embodiment, the method may further include the following step:
124. The access point determines a CCA list, where the CCA list includes identification information of a neighboring access point of the access point, a CCA threshold of the neighboring access point, and parameter information that indicates a current channel occupation status of a basic service set in which the neighboring access point is located.

Optionally, in another embodiment, in step 124, the access point may adjust the CCA threshold of the access point according to a change of the CCA list.

Optionally, in another embodiment, the method further includes the following step:
125. The access point sends the adjusted CCA threshold of the access point to the neighboring access point of the access point.

Optionally, in another embodiment, the method further includes the following step:
126. The access point sends indication information to a station in a basic service set in which the access point is located, where the indication information is used to instruct the station to adjust a CCA threshold of the station according to the indication information.

Optionally, in another embodiment, the indication information may include the adjusted CCA threshold of the access point.

Optionally, in another embodiment, in step 121, the access point may receive a CCA request frame sent by the another access point, and the CCA request frame may include the parameter information sent by the another access point.

Optionally, in another embodiment, the CCA request frame may be carried in an access network query protocol element or a public action frame.

Optionally, in another embodiment, in step 125, the access point may send a CCA response frame to the neighboring access point of the access point, and the CCA response frame may include the adjusted CCA threshold of the access point.

Optionally, in another embodiment, the CCA response frame may be carried in an access network query protocol element or a public action frame.

Optionally, in another embodiment, the indication information may be carried in a beacon frame, a request to send frame, or a probe response frame.

Optionally, in another embodiment, the beacon frame, the request to send frame, or the probe response frame may include a CCA adjust counter field.

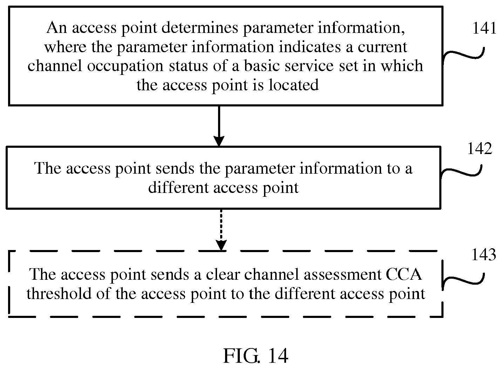

FIG. 14 is a schematic flowchart of a method for adjusting a CCA threshold according to another embodiment of the present invention. The method shown in FIG. 14 may be performed by the access point 110 involved in FIG. 11. As shown in FIG. 14, the method may include the following steps:
141. An access point determines parameter information, where the parameter information indicates a current channel occupation status of a basic service set in which the access point is located.
142. The access point sends the parameter information to a different access point.

In this embodiment of the present invention, the access point sends, to the different access point, the parameter information that indicates the channel occupation status of the basic service set in which the access point is located, so that the different access point adjusts a CCA threshold of the different access point according to the parameter information.

Optionally, in another embodiment, the parameter information sent by the another access point may include a quantity of active nodes in the basic service set, and the determining, by an access point, parameter information includes:
when a quantity of added active nodes or reduced active nodes in the basic service set exceeds a threshold, determining that the quantity of active nodes in the basic service set is the parameter information.

Optionally, in another embodiment, the method may further include the following step:
143. The access point sends a clear channel assessment CCA threshold of the access point to the different access point.

Optionally, in another embodiment, in step 143, the access point may send a CCA response frame to the different access point, and the CCA response frame may include the CCA threshold of the access point.

Optionally, in another embodiment, the CCA response frame may be carried in an access network query protocol element or a public action frame.

Optionally, in another embodiment, in step 142, the access point may send a CCA request frame to the different access point, and the CCA request frame may include the parameter information.

Optionally, in another embodiment, the CCA request frame may be carried in an access network query protocol element or a public action frame.

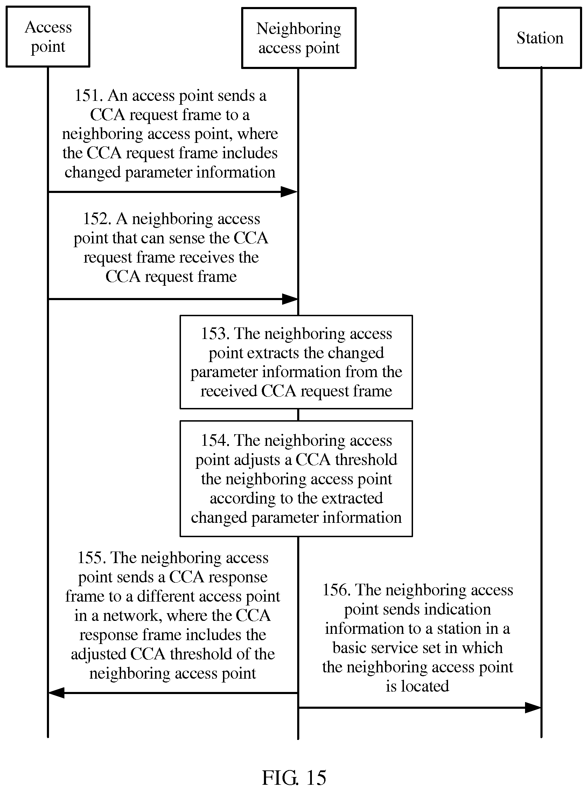

FIG. 15 is a schematic flowchart of a process of a method for adjusting a CCA threshold according to an embodiment of the present invention. A process of the method for adjusting a CCA threshold in FIG. 15 may include a process of interaction between access points, and a process of interaction between an access point and a station.

151. When parameter information that indicates a current channel occupation status of a basic service set in which an access point is located changes, the access point sends a CCA request frame to a neighboring access point, where the CCA request frame includes the changed parameter information.

It should be understood that a wireless local area network may include multiple basic service sets and multiple corresponding access points. In this embodiment of the present invention, only a specific access point in the multiple access points is described. Each access point in the wireless local area network may send, to a neighboring access point, parameter information that indicates a current channel occupation status of a basic service set in which the access point is located.

When the parameter information of the basic service set changes, the access point may send the changed parameter information to the neighboring access point. It should be understood that the parameter information may affect the CCA threshold of the access point and a CCA threshold of a different access point. Because the CCA threshold may be used to access a channel occupation status, the parameter information may be used to indicate the current channel occupation status of the basic service set.

In the wireless local area network, parameter information of multiple basic service sets may change. It should be understood that, at a specific moment, it is allowed to transmit changed parameter information of only one basic service set. Therefore, in this embodiment of the present invention, description about a specific access point is for a specific moment.

Optionally, the parameter information of the basic service set may include a quantity of active nodes in the basic service set. It should be understood that, when the quantity of active nodes in the basic service set changes, the parameter information may include the quantity of active nodes in the basic service set.

The parameter information of the basic service set may include at least one of the following parameters that can indicate the current channel occupation status of the basic service set, for example, the quantity of active nodes in the basic service set in which the access point is located, and transmit power of a station in the basic service set.

It should be understood that the basic service set may include an adding threshold for active nodes and a reduction threshold for active nodes. When a quantity of added active nodes exceeds the adding threshold or a quantity of reduced active nodes exceeds the reduction threshold, the quantity of active nodes affects the CCA threshold of the access point or a CCA threshold of the neighboring access point. Optionally, in another embodiment, when the quantity of added active nodes exceeds the adding threshold or the quantity of subtracted active nodes exceeds the reduction threshold, the access point in this embodiment of the present invention may trigger the access point to send the changed quantity of active nodes.

Optionally, in another embodiment, the CCA request frame may be carried in an access network query protocol element or a public action frame.

Description about the CCA request frame is applicable to the description about the CCA request frame in FIG. 4 and FIG. 6. To avoid repetition, the description is not provided herein again.

152. A neighboring access point that can sense the CCA request frame receives the CCA request frame.

It should be understood that a person of ordinary skill in the art may learn that the neighboring access point is an access point that can sense information sent by the access point and that is in the different access point.

153. The neighboring access point extracts the changed parameter information from the received CCA request frame.

After receiving the CCA request frame, each neighboring access point may extract changed parameter information from the CCA request frame.

154. The neighboring access point adjusts a CCA threshold of the neighboring access point according to the extracted changed parameter information.

If some access points in the neighboring access point determine that the changed parameter information is not enough for affecting CCA thresholds of these access points, these access points may set adjustment values to zero. That is, the CCA thresholds of these access points may remain unchanged.

The changed parameter information may include the quantity of active nodes in the basic service set in which the access point is located. In this embodiment of the present invention, the neighboring access point may increase the CCA threshold of the neighboring threshold when the quantity of active nodes in the extracted changed parameter information is greater than a quantity of active nodes in a basic service set in which the neighboring access point is located; and the neighboring access point may reduce the CCA threshold when the quantity of active nodes in the extracted changed parameter information is less than the quantity of active nodes in the basic service set in which the neighboring access point is located. Specifically, when increasing or reducing a CCA threshold, each neighboring access point may determine an adjustment granularity of the CCA threshold according to a difference between the quantity of active nodes in the extracted changed parameter information and a quantity of active nodes of the neighboring access point.

The neighboring access point may refer to other parameter information when adjusting the CCA threshold according to change of the quantity of active nodes. The other parameter information may include at least one piece of the following information: a location of a station in the basic service set in which the neighboring access point is located, transmit power of a station in the basic service set in which the neighboring access point is located, or a path loss of the basic service set in which the neighboring access point is located.

For example, a longer distance between the access point and the station in the basic service set in which the neighboring access point is located indicates a lower CCA threshold, that is, a greater adjustment value for reducing the CCA threshold. A shorter distance between the access point and the station in the basic service set in which the neighboring access point is located indicates a greater CCA threshold, that is, a greater adjustment value for increasing the CCA threshold.

Smaller transmit power of the access point and the station in the basic service set in which the neighboring access point is located indicates a lower CCA threshold, that is, a greater adjustment value for reducing the CCA threshold. Larger transmit power of the access point and the station in the basic service set in which the neighboring access point is located indicates a greater CCA threshold, that is, a greater adjustment value for increasing the CCA threshold.

A smaller path loss of the basic service set in which the neighboring access point is located indicates a greater CCA threshold, that is, a greater adjustment value for increasing the CCA threshold. Larger path losses of the access point and the station in the basic service set in which the neighboring access point is located indicate a lower CCA threshold, that is, a greater adjustment value for reducing the CCA threshold.

Specifically, by comparing the quantity of active nodes in the extracted changed parameter information with the quantity of active nodes of each neighboring access point, the neighboring access point may determine a new CCA threshold to which the neighboring access point is to be increased or reduced. It should be understood that, for a specific value to which the CCA threshold is adjusted, different thresholds may be obtained by using different algorithms and adjustment methods. In this embodiment of the present invention, a specific method used by the neighboring access point to adjust the CCA threshold of the neighboring access point to a specific threshold is not limited.

Optionally, each access point in a network may store a CCA list. The CCA list includes identification information of a neighboring access point, a CCA threshold of the neighboring access point, and parameter information that indicates a current channel occupation status of a basic service set in which the neighboring access point is located.

Therefore, the neighboring access point may store the received changed parameter information in the CCA list. It can be learned from the foregoing description that, when parameter information and CCA thresholds of multiple access points change, the changed parameter information and the changed CCA thresholds may be separately sent to neighboring access points at different moments. Therefore, the CCA list may include changed parameter information and a changed CCA threshold of the neighboring access point. That is, when the parameter information and the CCA threshold of the neighboring access point change, the changed parameter information and the changed CCA threshold may be sent to a neighboring access point in a way similar to that of the access point.

It can be learned that multiple pieces of changed parameter information and multiple changed CCA thresholds of the multiple access points are also recorded in the CCA list, where the multiple pieces of changed parameter information and the multiple changed CCA thresholds are received by the neighboring access point in multiple times.

Specifically, identification information that is of the multiple access points and that is in the CCA list may be used to identify different access points. In the CCA list, CCA thresholds of the multiple access points and changed parameter information of the multiple access points may include information received from the multiple access points.

Optionally, in another embodiment, each access point in neighboring access points may adjust a CCA threshold of the access point according to a CCA list of the access point.

Optionally, in an embodiment, the neighboring access point may adjust a CCA threshold of the neighboring access point based on the changed parameter information in the CCA list. Specifically, each neighboring access point may adjust the CCA threshold according to the quantity of active nodes, and adjust the CCA threshold of the neighboring access point with reference to information such as a location, power, and a path loss of a station in a basic service set in which the neighboring access point is located.

For example, a longer distance between the access point and the station in the basic service set in which the neighboring access point is located indicates a lower CCA threshold, that is, a greater adjustment value for reducing the CCA threshold. A shorter distance between the access point and the station in the basic service set in which the neighboring access point is located indicates a greater CCA threshold, that is, a greater adjustment value for increasing the CCA threshold.

Smaller transmit power of the access point and the station in the basic service set in which the neighboring access point is located indicates a lower CCA threshold, that is, a greater adjustment value for reducing the CCA threshold. Larger transmit power of the access point and the station in the basic service set in which the neighboring access point is located indicates a greater CCA threshold, that is, a greater adjustment value for increasing the CCA threshold.

A smaller path loss of the basic service set in which the neighboring access point is located indicates a greater CCA threshold, that is, a greater adjustment value for increasing the CCA threshold. Larger path losses of the access point and the station in the basic service set in which the neighboring access point is located indicate a lower CCA threshold, that is, a greater adjustment value for reducing the CCA threshold.

Optionally, in another embodiment, the neighboring access point in this embodiment of the present invention may also use a changed CCA threshold in the CCA list as a determining criterion. For example, if the changed CCA threshold in the CCA list is greater than the CCA threshold of the neighboring access point, the neighboring access point increases the CCA threshold of the neighboring access point. If the changed CCA threshold in the CCA list is less than the CCA threshold of the neighboring access point, the neighboring access point reduces the CCA threshold of the neighboring access point.

Optionally, in another embodiment, the neighboring access point may adjust the CCA threshold of the neighboring access point based on both the changed parameter information and the changed CCA threshold. For example, the neighboring access point may qualitatively increase or reduce the CCA threshold with reference to the changed parameter information in the CCA list, and quantitatively determine, with reference to the changed CCA threshold in the CCA list, a specific value to which the CCA threshold is to be increased or reduced.

Optionally, in another embodiment, the neighboring access point in this embodiment of the present invention may further calculate a new CCA threshold of the neighboring access point based on a specific algorithm and by using both the changed parameter information and the changed CCA threshold as input values.

Optionally, in another embodiment, the neighboring access point in this embodiment of the present invention may further calculate a new CCA threshold of the neighboring access point by using a specific algorithm by using both parameter information of all access points in the CCA list of the neighboring access point and CCA thresholds of all the access points as input values. Optionally, a specific algorithm used as an adjustment algorithm in this embodiment of the present invention is not limited thereto.

155. The neighboring access point sends a CCA response frame to a different access point in a network, where the CCA response frame includes the adjusted CCA threshold of the neighboring access point.

Description about the CCA response frame in this embodiment of the present invention is applicable to the description about the CCA response frame in FIG. 5 and FIG. 7. To avoid repetition, the description is not provided herein again.

156. The neighboring access point sends indication information to a station in a basic service set in which the neighboring access point is located, so that the station in the basic service set adjusts a CCA threshold of the station according to the indication information.

It should be understood that, after each access point in the neighboring access point adjusts a CCA threshold of the access point, the access point may adjust a CCA threshold of a station in a basic service set in which the access point is located.

There are multiple stations in the basic service set. It should be understood that, in this embodiment of the present invention, when a CCA threshold of a station in a basic service set in which each access point is located is adjusted, CCA thresholds of all stations in the basic service set are adjusted, or CCA thresholds of some stations in all stations are adjusted.

Optionally, in another embodiment, the neighboring access point in this embodiment of the present invention may determine new CCA thresholds of all stations or some stations according to the adjusted CCA threshold of the neighboring access point, and adjust the CCA thresholds of all the stations or some stations to the new CCA thresholds.

Optionally, in another embodiment, in some special circumstances, the neighboring access point may further adjust CCA thresholds of individual stations, so that the individual stations can communicate concurrently. In this embodiment of the present invention, a method used by each neighboring access point to adjust a CCA threshold of a station is not limited.

Specifically, the indication information may be denoted by a data frame. The indication information may include a new CCA threshold to which the station needs to be adjusted. The station may adjust the CCA threshold of the station to the new CCA threshold according to the indication information.

Optionally, in another embodiment, each access point in the neighboring access point may use an adjusted CCA threshold of the access point as a new CCA threshold of a station. The indication information may include the adjusted CCA threshold. In this way, according to the indication information, the station may adjust the CCA threshold of the station to the adjusted CCA threshold of the access point to which the station belongs.

The indication information may be carried in a beacon frame, a request to send frame, or a probe response frame. A manner of carrying the indication information may be the same as the description about adding the indication information to different data frames in FIG. 8 to FIG. 10. To avoid repetition, the description is not provided herein again.

In this embodiment of the present invention, an access point adjusts a CCA threshold of the access point according to parameter information and a CCA threshold that are sent by a different access point. Therefore, the CCA threshold of the access point can be adjusted dynamically, and communication efficiency is improved.

In addition, the access point in this embodiment of the present invention may adjust the CCA threshold of the access point between basic service sets, and may also adjust a CCA threshold of a station within the basic service set. In this way, by using a method of hierarchically adjusting CCA thresholds of all nodes in a network, the access point can run a complex adjustment algorithm only on the access point, and the station only needs to collaborate with the access point in adjusting the CCA threshold. This embodiment of the present invention can reduce overheads and improve flexibility and accuracy of a process of adjusting a CCA threshold of a node.

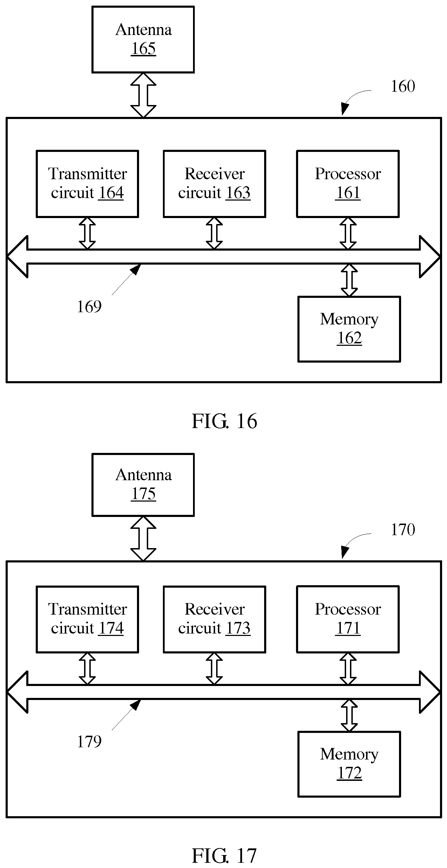

FIG. 16 is a block diagram of an access point according to another embodiment of the present invention. An access point 160 in FIG. 16 may be configured to implement steps and methods in the foregoing method embodiments. The access point 160 in FIG. 16 includes a processor 161, a memory 162, a receiver circuit 163, and a transmitter circuit 164. The processor 161, the memory 162, the receiver circuit 163, and the transmitter circuit 164 are connected by using a bus system 169.

In addition, the access point 160 may further include an antenna 165 and the like. The processor 161 controls an operation of the access point 160. The memory 162 may include a read-only memory and a random access memory, and provide an instruction and data to the processor 161. A part of the memory 162 may further include a non-volatile random access memory (NVRAM). In specific application, the transmitter circuit 164 and the receiver circuit 163 may be coupled to the antenna 165. All components of the access point 160 are coupled by using the bus system 169, and the bus system 169 includes a power supply bus, a control bus, and a state signal bus in addition to a data bus. However, for clarity, various types of buses in the figure are marked as the bus system 169.

The processor 161 may be an integrated circuit chip with a signal processing capability. The processor 161 may be a general purpose processor, a digital signal processor (DSP), an application-specific integrated circuit (ASIC), a field programmable gate array (FPGA) or another programmable logical device, a discrete gate or transistor logical device, or a discrete hardware assembly. The processor 161 may implement or execute the methods, steps, and logical block diagrams disclosed in the embodiments of the present invention. The general-purpose processor may be a microprocessor, or the processor may also be any conventional processor or the like. The processor 161 reads information in the memory 162, and controls each part of the access point 160 by working with hardware of the processor 161.

The method in FIG. 12 may be implemented by the access point 160 in FIG. 16. To avoid repetition, details are not described herein.

Specifically, under control of the processor 161, the access point 160 completes the following operations:
receiving parameter information sent by another access point, where the parameter information sent by the another access point indicates a current channel occupation status of a basic service set in which the another access point is located; and
adjusting a CCA threshold of the access point according to the parameter information sent by the another access point.

In this embodiment of the present invention, an access point adjusts a CCA threshold of the access point according to parameter information that is sent by a different access point and that indicates a channel occupation status. Therefore, the CCA threshold of the access point can be adjusted dynamically, and communication efficiency is improved.

Optionally, in an embodiment, the parameter information sent by the another access point may include a quantity of active nodes in the basic service set in which the another access point is located, and the processor 161 may increase the CCA threshold of the access point when the quantity of active nodes in the basic service set in which the another access point is located is greater than a quantity of active nodes in a basic service set in which the access point is located; or
reduce the CCA threshold of the access point when the quantity of active nodes in the basic service set in which the another access point is located is less than a quantity of active nodes in a basic service set in which the access point is located.

Optionally, in another embodiment, the processor 161 may adjust the CCA threshold of the access point 160 according to the parameter information sent by the another access point and other parameter information, and the other parameter information may include at least one piece of the following information: a location of a station in the basic service set in which the access point is located, transmit power of a station in the basic service set in which the access point is located, or a path loss of the basic service set in which the access point is located.

Optionally, in another embodiment, the receiver circuit 163 may further receive a CCA threshold of the another access point sent by the another access point. The processor 161 may adjust the CCA threshold of the access point according to the parameter information and the CCA threshold of the another access point that are sent by the another access point.

Optionally, in another embodiment, the memory 162 may be configured to store a CCA list, and the CCA list includes identification information of a neighboring access point of the access point, a CCA threshold of the neighboring access point, and parameter information that indicates a channel occupation status of a basic service set in which the neighboring access point is located.

Optionally, in another embodiment, the processor 161 may adjust the CCA threshold of the access point according to a change of the CCA list.

Optionally, in another embodiment, the transmitter circuit 164 may send the adjusted CCA threshold of the access point to the neighboring access point of the access point 160.

Optionally, in another embodiment, the transmitter circuit 164 may send indication information to the station in the basic service set in which the access point is located, and the indication information is used to instruct the station to adjust a CCA threshold of the station according to the indication information.

Optionally, in another embodiment, the indication information sent by the transmitter circuit 164 may include the adjusted CCA threshold of the access point.

Optionally, in another embodiment, the receiver circuit 163 may receive a CCA request frame sent by the another access point, and the CCA request frame may include the parameter information sent by the another access point.

Optionally, in another embodiment, the CCA request frame received by the receiver circuit 163 may be carried in an access network query protocol element or a public action frame.

Optionally, in another embodiment, the transmitter circuit 164 may send a CCA response frame to the neighboring access point of the access point 160, and the CCA response frame may include the adjusted CCA threshold of the access point.

Optionally, in another embodiment, the CCA response frame sent by the transmitter circuit 164 may be carried in an access network query protocol element or a public action frame.

Optionally, in another embodiment, the indication information sent by the transmitter circuit 164 may be carried in a beacon frame, a request to send frame, or a probe response frame.

Optionally, in another embodiment, the beacon frame, the request to send frame, or the probe response frame may include a CCA adjust counter field.

In this embodiment of the present invention, an access point adjusts a CCA threshold of the access point according to parameter information and a CCA threshold that are sent by a different access point. Therefore, the CCA threshold of the access point can be adjusted dynamically, and communication efficiency is improved.

In addition, the access point in this embodiment of the present invention may adjust the CCA threshold of the access point between basic service sets, and may also adjust a CCA threshold of a station within the basic service set. In this way, by using a method of hierarchically adjusting CCA thresholds of all nodes in a network, the access point can run a complex adjustment algorithm only on the access point, and the station only needs to collaborate with the access point in adjusting the CCA threshold. This embodiment of the present invention can reduce overheads and improve flexibility and accuracy of a process of adjusting a CCA threshold of a node.

FIG. 17 is a block diagram of an access point according to another embodiment of the present invention. An access point 170 in FIG. 17 may be configured to implement steps and methods in the foregoing method embodiments. The access point 170 in FIG. 17 includes a processor 171, a memory 172, a receiver circuit 173, and a transmitter circuit 174. The processor 171, the memory 172, the receiver circuit 173, and the transmitter circuit 174 are connected by using a bus system 179.

In addition, the access point 170 may further include an antenna 175 and the like. The processor 171 controls an operation of the access point 170. The memory 172 may include a read-only memory and a random access memory, and provide an instruction and data to the processor 171. A part of the memory 172 may further include a non-volatile random access memory (NVRAM). In specific application, the transmitter circuit 174 and the receiver circuit 173 may be coupled to the antenna 175. All components of the access point 170 are coupled by using the bus system 179, and the bus system 179 includes a power supply bus, a control bus, and a state signal bus in addition to a data bus. However, for clarity, various types of buses in the figure are marked as the bus system 179.

The processor 171 may be an integrated circuit chip with a signal processing capability. The processor 171 may be a general purpose processor, a digital signal processor (DSP), an application-specific integrated circuit (ASIC), a field programmable gate array (FPGA) or another programmable logical device, a discrete gate or transistor logical device, or a discrete hardware assembly. The processor 171 may implement or execute the methods, steps, and logical block diagrams disclosed in the embodiments of the present invention. The general-purpose processor may be a microprocessor, or the processor may also be any conventional processor or the like. The processor 171 reads information in the memory 172, and controls each part of the access point 170 by working with hardware of the processor 171.

The method in FIG. 14 may be implemented by the access point 170 in FIG. 17. To avoid repetition, details are not described herein.

Specifically, under control of the processor 171, the access point 170 completes the following operations:
determining parameter information, where the parameter information indicates a current channel occupation status of a basic service set in which the access point is located; and
sending the parameter information to a different access point.

Optionally, in an embodiment, the parameter information received by the receiver circuit 173 may include a quantity of active nodes in the basic service set, and the processor 171 is specifically configured to: when a quantity of added active nodes or reduced active nodes in the basic service set exceeds a threshold, determine that the quantity of active nodes in the basic service set is the parameter information.

Optionally, in another embodiment, the transmitter circuit 174 may further send a clear channel assessment CCA threshold of the access point to the different access point.

Optionally, in another embodiment, the transmitter circuit 174 may send a CCA response frame to the different access point, and the CCA response frame may include the CCA threshold of the access point.

Optionally, in another embodiment, the CCA response frame sent by the transmitter circuit 174 is carried in an access network query protocol element or a public action frame.

Optionally, in another embodiment, the transmitter circuit 174 may send a CCA request frame to the different access point, and the CCA request frame may include the parameter information.

Optionally, in another embodiment, the CCA request frame sent by the transmitter circuit 174 may be carried in an access network query protocol element or a public action frame.

In this embodiment of the present invention, when parameter information that indicates a current channel occupation status of a basic service set in which an access point is located, the access point sends the changed parameter information to a different access point, so that the different access point adjusts a CCA threshold of the different access point according to the changed parameter information.

It should be understood that "an embodiment" or "the embodiment" mentioned throughout the specification means that specific characteristics, structures or features related to the embodiment are included in at least one embodiment of the present invention. Therefore, "in an embodiment" or "in the embodiment" that appears throughout the specification unnecessarily refers to the same embodiment. In addition, such specific characteristics, structures or features may be combined in one or more embodiments in any appropriate manner. It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and disc used by the present invention includes a compact disc(CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A first access point, comprising:
a receiving unit (21), configured to receive parameter information sent by a second access point; and
an adjustment unit (22), configured to adjust a clear channel assessment, CCA, threshold of the first access point according to the parameter information sent by the second access point;
**characterized in that** the parameter information sent by the second access point indicates a current channel occupation status of a basic service set in which the second access point is located; wherein the parameter information sent by the second access point includes at least one of the following parameters: a quantity of active nodes in the basic service set in which the second access point is located, or transmit power of a station in the basic service set in which the second access point is located.

2. The first access point according to claim 1, wherein the parameter information sent by the second access point comprises a quantity of active nodes in the basic service set in which the second access point is located, and the adjustment unit (22) is specifically configured to:
increase the CCA threshold of the first access point when the quantity of active nodes in the basic service set in which the second access point is located is greater than a quantity of active nodes in a basic service set in which the first access point is located; or reduce the CCA threshold of the first access point when the quantity of active nodes in the basic service set in which the second access point is located is less than a quantity of active nodes in a basic service set in which the first access point is located.

3. The first access point according to claim 2, wherein the adjustment unit (22) is specifically configured to adjust the CCA threshold of the first access point according to the parameter information sent by the second access point and other parameter information, and the other parameter information comprises at least one piece of the following information: a location of a station in the basic service set in which the first access point is located, transmit power of a station in the basic service set in which the first access point is located, or a path loss of the basic service set in which the first access point is located.

4. The first access point according to any one of claims 1 to 3, wherein the receiving unit (21) is further configured to receive a CCA threshold of the second access point sent by the second access point; and
the adjustment unit (22) is specifically configured to adjust the CCA threshold of the first access point according to the parameter information and the CCA threshold of the second access point that are sent by the second access point.

5. The first access point according to any one of claims 1 to 4, further comprising:
a storage unit (23), configured to store a CCA list, wherein the CCA list comprises identification information of a neighboring access point of the first access point, a CCA threshold of the neighboring access point, and parameter information that indicates a current channel occupation status of a basic service set in which the neighboring access point is located.

6. The first access point according to any one of claims 4 to 5, further comprising:
a sending unit (24), configured to send an adjusted CCA threshold of the first access point to the neighboring access point of the first access point.

7. A second access point, comprising:
a determining unit (111), configured to determine parameter information; and
a sending unit (112), configured to send the parameter information to a first access point;
**characterized in that** the parameter information indicates a current channel occupation status of a basic service set in which the second access point is located; wherein the parameter information includes at least one of the following parameters: a quantity of active nodes in the basic service set in which the second access point is located, or transmit power of a station in the basic service set in which the second access point is located.

8. The second access point according to claim 7, wherein the parameter information comprises a quantity of active nodes in the basic service set, and the determining unit (111) is specifically configured to:
when a quantity of added active nodes or reduced active nodes in the basic service set exceeds a threshold, determine that the quantity of active nodes in the basic service set is the parameter information.

9. The second access point according to claim 7 or 8, wherein the sending unit (112) is further configured to send a clear channel assessment, CCA, threshold of the second access point to the first access point.

10. The second access point according to claim 9, wherein the sending unit (112) is specifically configured to send a CCA response frame to the first access point, and the CCA response frame comprises the CCA threshold of the second access point.

11. A method for adjusting a clear channel assessment threshold, comprising:
receiving (121), by a first access point, parameter information sent by a second access point; and
adjusting (122), by the first access point, a clear channel assessment, CCA, threshold of the first access point according to the parameter information sent by the second access point;
**characterized in that** the parameter information sent by the second access point indicates a current channel occupation status of a basic service set in which the second access point is located; wherein the parameter information sent by the second access point includes at least one of the following parameters: a quantity of active nodes in the basic service set in which the second access point is located, or transmit power of a station in the basic service set in which the second access point is located.

12. The method according to claim 11, wherein the parameter information sent by the second access point comprises a quantity of active nodes in the basic service set in which the second access point is located, and the adjusting (122), by the first access point, a CCA threshold of the first access point according to the parameter information sent by the second access point comprises:
increasing, by the first access point, the CCA threshold of the first access point when the quantity of active nodes in the basic service set in which the second access point is located is greater than a quantity of active nodes in a basic service set in which the first access point is located; or reducing, by the first access point, the CCA threshold of the first access point when the quantity of active nodes in the basic service set in which the second access point is located is less than a quantity of active nodes in a basic service set in which the first access point is located.

13. The method according to claim 12, wherein the adjusting (122), by the first access point, a clear channel assessment CCA threshold of the first access point according to the parameter information sent by the second access point comprises:
adjusting, by the first access point, the CCA threshold of the first access point according to the parameter information sent by the second access point and other parameter information, wherein the other parameter information comprises at least one piece of the following information: a location of a station in the basic service set in which the first access point is located, transmit power of a station in the basic service set in which the first access point is located, or a path loss of the basic service set in which the first access point is located.

14. The method according to any one of claims 11 to 13, further comprising:
receiving (123), by the first access point, a CCA threshold of the second access point sent by the second access point, wherein the adjusting (122), by the first access point, a clear channel assessment CCA threshold of the first access point according to the parameter information sent by the second access point comprises:
adjusting, by the first access point, the CCA threshold of the first access point according to the parameter information and the CCA threshold of the second access point that are sent by the second access point.

15. The method according to any one of claims 11 to 14, further comprising:
determining (124), by the first access point, a CCA list, wherein the CCA list comprises identification information of a neighboring access point of the first access point, a CCA threshold of the neighboring access point, and parameter information that indicates a current channel occupation status of a basic service set in which the neighboring access point is located.

16. The method according to any one of claims 13 to 15, further comprising:
sending (125), by the first access point, the adjusted CCA threshold of the first access point to the neighboring access point of the first access point.

17. A method for adjusting a clear channel assessment threshold, comprising:
determining (141), by a second point, parameter information; and
sending (142), by the second access point, the parameter information to a first access point;
**characterized in that** the parameter information indicates a current channel occupation status of a basic service set in which the second access point is located; wherein the parameter information includes at least one of the following parameters: a quantity of active nodes in the basic service set in which the second access point is located, or transmit power of a station in the basic service set in which the second access point is located.

18. The method according to claim 17, wherein the parameter information comprises a quantity of active nodes in the basic service set, and the determining (141), by a second access point, parameter information comprises:
when a quantity of added active nodes or reduced active nodes in the basic service set exceeds a threshold, determining that the quantity of active nodes in the basic service set is the parameter information.

19. The method according to claim 17 or 18, further comprising:
sending (143), by the second access point, a clear channel assessment, CCA, threshold of the second access point to the first access point.

20. The method according to claim 19, wherein the sending (143), by the second access point, a clear channel assessment CCA threshold of the second access point to the first access point comprises:
sending, by the second access point, a CCA response frame to the first access point, wherein the CCA response frame comprises the CCA threshold of the second access point.

## Patentansprüche

1. Erster Zugangspunkt, umfassend:
eine Empfangseinheit (21), die dazu konfiguriert ist, Parameterinformationen, die von einem zweiten Zugangspunkt gesendet werden, zu empfangen; und
eine Anpassungseinheit (22), die dazu konfiguriert ist, einen CCA-Schwellenwert (CCA = "Clear Channel Assessment" = Beurteilung eines freien Kanals) des ersten Zugangspunktes gemäß den Parameterinformationen, die von dem zweiten Zugangspunkt gesendet werden, anzupassen;
**dadurch gekennzeichnet, dass** die Parameterinformationen, die von dem zweiten Zugangspunkt gesendet werden, einen aktuellen Kanalbelegungsstatus eines Basisdienstsatzes anzeigen, in dem sich der zweite Zugangspunkt befindet; wobei die Parameterinformationen, die von dem zweiten Zugangspunkt gesendet werden, mindestens einen der folgenden Parameter enthalten: eine Anzahl von aktiven Knoten in dem Basisdienstsatz, in dem sich der zweite Zugangspunkt befindet, oder Übertragungsleistung einer Station in dem Basisdienstsatz, in dem sich der zweite Zugangspunkt befindet.

2. Erster Zugangspunkt nach Anspruch 1, wobei die Parameterinformationen, die von dem zweiten Zugangspunkt gesendet werden, eine Anzahl von aktiven Knoten im Basisdienstsatz umfassen, in dem sich der zweite Zugangspunkt befindet, und die Anpassungseinheit (22) speziell dazu konfiguriert ist:
den CCA-Schwellenwert des ersten Zugangspunktes zu erhöhen, wenn die Anzahl der aktiven Knoten im Basisdienstsatz, in dem sich der zweite Zugangspunkt befindet, größer ist als die Anzahl der aktiven Knoten in einem Basisdienstsatz, in dem sich der erste Zugangspunkt befindet; oder den CCA-Schwellenwert des ersten Zugangspunktes zu reduzieren, wenn die Anzahl der aktiven Knoten im Basisdienstsatz, in dem sich der zweite Zugangspunkt befindet, kleiner ist als die Anzahl der aktiven Knoten in einem Basisdienstsatz, in dem sich der erste Zugangspunkt befindet.

3. Erster Zugangspunkt nach Anspruch 2, wobei die Anpassungseinheit (22) speziell dazu konfiguriert ist, den CCA-Schwellenwert des ersten Zugangspunktes gemäß den Parameterinformationen, die von dem zweiten Zugangspunkt gesendet werden, und anderen Parameterinformationen anzupassen, und die anderen Parameterinformationen mindestens eine der folgenden Informationen umfassen:
einen Standort einer Station in dem Basisdienstsatz, in dem sich der erste Zugangspunkt befindet, Übertragungsleistung einer Station in dem Basisdienstsatz, in dem sich der erste Zugangspunkt befindet, oder einen Pfadverlust des Basisdienstsatzes, in dem sich der erste Zugangspunkt befindet.

4. Erster Zugangspunkt nach einem der Ansprüche 1 bis 3, wobei die Empfangseinheit (21) ferner dazu konfiguriert ist, einen CCA-Schwellenwert des zweiten Zugangspunktes zu empfangen, der von dem zweiten Zugangspunkt gesendet wird; und
die Anpassungseinheit (22) speziell dazu konfiguriert ist, den CCA-Schwellenwert des ersten Zugangspunktes gemäß den Parameterinformationen und dem CCA-Schwellenwert des zweiten Zugangspunktes, die von dem zweiten Zugangspunkt gesendet werden, anzupassen.

5. Erster Zugangspunkt nach einem der Ansprüche 1 bis 4, ferner umfassend:
eine Speichereinheit (23), die dazu konfiguriert ist, eine CCA-Liste zu speichern, wobei die CCA-Liste Identifikationsinformationen eines benachbarten Zugangspunktes des ersten Zugangspunktes, einen CCA-Schwellenwert des benachbarten Zugangspunktes und Parameterinformationen umfasst, die einen aktuellen Kanalbelegungsstatus eines Basisdienstsatzes anzeigen, in dem sich der benachbarte Zugangspunkt befindet.

6. Erster Zugangspunkt nach einem der Ansprüche 4 bis 5, ferner umfassend:
eine Sendeeinheit (24), die dazu konfiguriert ist, einen angepassten CCA-Schwellenwert des ersten Zugangspunktes an den benachbarten Zugangspunkt des ersten Zugangspunktes zu senden.

7. Zweiter Zugangspunkt, umfassend:
eine Bestimmungseinheit (111), die dazu konfiguriert ist, Parameterinformationen zu bestimmen, und
eine Sendeeinheit (112), die dazu konfiguriert ist, die Parameterinformationen an einen ersten Zugangspunkt zu senden;
**dadurch gekennzeichnet, dass** die Parameterinformationen einen aktuellen Kanalbelegungsstatus eines Basisdienstsatzes anzeigen, in dem sich der zweite Zugangspunkt befindet; wobei die Parameterinformationen mindestens einen der folgenden Parameter enthalten: eine Anzahl von aktiven Knoten in dem Basisdienstsatz, in dem sich der zweite Zugangspunkt befindet, oder Übertragungsleistung einer Station in dem Basisdienstsatz, in dem sich der zweite Zugangspunkt befindet.

8. Zweiter Zugangspunkt nach Anspruch 7, wobei die Parameterinformationen eine Anzahl von aktiven Knoten im Basisdienstsatz umfassen, und die Bestimmungseinheit (111) speziell dazu konfiguriert ist:
wenn eine Anzahl von hinzugefügten aktiven Knoten oder reduzierten aktiven Knoten im Basisdienstsatz einen Schwellenwert überschreitet, zu bestimmen, dass die Anzahl der aktiven Knoten im Basisdienstsatz die Parameterinformationen sind.

9. Zweiter Zugangspunkt nach Anspruch 7 oder 8, wobei die Sendeeinheit (112) ferner dazu konfiguriert ist, einen CCA-Schwellenwert (CCA = "Clear Channel Assessment" = Beurteilung eines freien Kanals) des zweiten Zugangspunktes an den ersten Zugangspunkt zu senden.

10. Zweiter Zugangspunkt nach Anspruch 9, wobei die Sendeeinheit (112) speziell dazu konfiguriert ist, einen CCA-Antwort-Rahmen an den ersten Zugangspunkt zu senden, und der CCA-Antwort-Rahmen den CCA-Schwellenwert des zweiten Zugangspunktes umfasst.

11. Verfahren zum Anpassen eines Schwellenwertes zur Beurteilung eines freien Kanals, umfassend:
Empfangen (121) von Parameterinformationen, die von einem zweiten Zugangspunkt gesendet werden, durch einen ersten Zugangspunkt; und
Anpassen (122) eines CCA-Schwellenwertes (CCA = "Clear Channel Assessment" = Beurteilung eines freien Kanals) des ersten Zugangspunktes gemäß den Parameterinformationen, die von dem zweiten Zugangspunkt gesendet werden, durch den ersten Zugangspunkt;
**dadurch gekennzeichnet, dass** die Parameterinformationen, die von dem zweiten Zugangspunkt gesendet werden, einen aktuellen Kanalbelegungsstatus eines Basisdienstsatzes anzeigen, in dem sich der zweite Zugangspunkt befindet; wobei die Parameterinformationen, die von dem zweiten Zugangspunkt gesendet werden, mindestens einen der folgenden Parameter enthalten: eine Anzahl von aktiven Knoten in dem Basisdienstsatz, in dem sich der zweite Zugangspunkt befindet, oder Übertragungsleistung einer Station in dem Basisdienstsatz, in dem sich der zweite Zugangspunkt befindet.

12. Verfahren nach Anspruch 11, wobei die Parameterinformationen, die von dem zweiten Zugangspunkt gesendet werden, eine Anzahl aktiver Knoten in dem Basisdienstsatz umfassen, in dem sich der zweite Zugangspunkt befindet, und die Anpassung (122), durch den ersten Zugangspunkt, eines CCA-Schwellenwertes des ersten Zugangspunktes gemäß den Parameterinformationen, die von dem zweiten Zugangspunkt gesendet werden, umfasst:
Erhöhen des CCA-Schwellenwertes des ersten Zugangspunktes durch den ersten Zugangspunkt, wenn die Anzahl der aktiven Knoten im Basisdienstsatz, in dem sich der zweite Zugangspunkt befindet, größer ist als die Anzahl der aktiven Knoten in einem Basisdienstsatz, in dem sich der erste Zugangspunkt befindet; oder Reduzieren des CCA-Schwellenwertes des ersten Zugangspunktes durch den ersten Zugangspunkt, wenn die Anzahl der aktiven Knoten im Basisdienstsatz, in dem sich der zweite Zugangspunkt befindet, kleiner ist als eine Anzahl der aktiven Knoten in einem Basisdienstsatz, in dem sich der erste Zugangspunkt befindet.

13. Verfahren nach Anspruch 12, wobei das Anpassen (122) eines CCA-Schwellenwertes (CCA = "Clear Channel Assessment" = Beurteilung eines freien Kanals) des ersten Zugangspunktes durch den ersten Zugangspunkt gemäß den Parameterinformationen, die von dem zweiten Zugangspunkt gesendet werden, umfasst:
Anpassen des CCA-Schwellenwertes des ersten Zugangspunktes durch den ersten Zugangspunkt gemäß den Parameterinformationen, die von dem zweiten Zugangspunkt gesendet werden, und anderer Parameterinformationen, wobei die anderen Parameterinformationen mindestens eine der folgenden Informationen umfassen: einen Standort einer Station in dem Basisdienstsatz, in dem sich der erste Zugangspunkt befindet, Übertragungsleistung einer Station in dem Basisdienstsatz, in dem sich der erste Zugangspunkt befindet, oder einen Pfadverlust des Basisdienstsatzes, in dem sich der erste Zugangspunkt befindet.

14. Verfahren nach einem der Ansprüche 11 bis 13, ferner umfassend:
Empfangen (123) eines CCA-Schwellenwertes des zweiten Zugangspunktes, der von dem zweiten Zugangspunkt gesendet wird, durch den ersten Zugangspunkt, wobei das Anpassen (122) eines CCA-Schwellenwertes des ersten Zugangspunktes gemäß den Parameterinformationen, die von dem zweiten Zugangspunkt gesendet werden, durch den ersten Zugangspunkt umfasst:
Anpassen des CCA-Schwellenwertes des ersten Zugangspunktes durch den ersten Zugangspunkt gemäß den Parameterinformationen und des CCA-Schwellenwertes des zweiten Zugangspunktes, die von dem zweiten Zugangspunkt gesendet werden.

15. Verfahren nach einem der Ansprüche 11 bis 14, ferner umfassend:
Bestimmen (124) einer CCA-Liste durch den ersten Zugangspunkt, wobei die CCA-Liste Identifikationsinformationen eines benachbarten Zugangspunktes des ersten Zugangspunktes, einen CCA-Schwellenwert des benachbarten Zugangspunktes und Parameterinformationen umfasst, die einen aktuellen Kanalbelegungsstatus eines Basisdienstsatzes anzeigen, in dem sich der benachbarte Zugangspunkt befindet.

16. Verfahren nach einem der Ansprüche 13 bis 15, ferner umfassend:
Senden (125) des angepassten CCA-Schwellenwertes des ersten Zugangspunktes durch den ersten Zugangspunkt an den benachbarten Zugangspunkt des ersten Zugangspunktes.

17. Verfahren zum Anpassen eines Schwellenwertes zur Beurteilung eines freien Kanals, umfassend:
Bestimmen (141) von Parameterinformationen durch einen zweiten Punkt; und
Senden (142) der Parameterinformationen durch den zweiten Zugangspunkt an einen ersten Zugangspunkt;
**dadurch gekennzeichnet, dass** die Parameterinformationen einen aktuellen Kanalbelegungsstatus eines Basisdienstsatzes anzeigen, in dem sich der zweite Zugangspunkt befindet; wobei die Parameterinformationen mindestens einen der folgenden Parameter enthalten: eine Anzahl von aktiven Knoten in dem Basisdienstsatz, in dem sich der zweite Zugangspunkt befindet, oder Übertragungsleistung einer Station in dem Basisdienstsatz, in dem sich der zweite Zugangspunkt befindet.

18. Verfahren nach Anspruch 17, wobei die Parameterinformationen eine Anzahl von aktiven Knoten in dem Basisdienstsatz umfassen und das Bestimmen (141) von Parameterinformationen durch einen zweiten Zugangspunkt umfasst:
wenn eine Anzahl von hinzugefügten aktiven Knoten oder reduzierten aktiven Knoten im Basisdienstsatz einen Schwellenwert überschreitet, Bestimmen, dass die Anzahl der aktiven Knoten im Basisdienstsatz die Parameterinformationen sind.

19. Verfahren nach Anspruch 17 oder 18, ferner umfassend:
Senden (143) eines CCA-Schwellenwertes (CCA = "Clear Channel Assessment" = Beurteilung eines freien Kanals) des zweiten Zugangspunktes durch den zweiten Zugangspunkt an den ersten Zugangspunkt.

20. Verfahren nach Anspruch 19, wobei das Senden (143) eines CCA-Schwellenwertes (CCA = "Clear Channel Assessment" = Beurteilung eines freien Kanals) des zweiten Zugangspunktes durch den zweiten Zugangspunkt an den ersten Zugangspunkt umfasst:
Senden eines CCA-Antwortrahmens durch den zweiten Zugangspunkt an den ersten Zugangspunkt, wobei der CCA-Antwortrahmen den CCA-Schwellenwert des zweiten Zugangspunktes umfasst.

## Revendications

1. Premier point d'accès, comprenant :
une unité de réception (21), configurée pour recevoir des informations paramétriques envoyées par un deuxième point d'accès ; et
une unité d'ajustement (22), configurée pour ajuster un seuil d'évaluation de canal libre, CCA, du premier point d'accès en fonction des informations paramétriques envoyées par le deuxième point d'accès ;
**caractérisé en ce que** les informations paramétriques envoyées par le deuxième point d'accès indiquent un statut d'occupation de canal actuel d'un ensemble de services de base dans lequel le deuxième point d'accès est localisé ; dans lequel les informations paramétriques envoyées par le deuxième point d'accès incluent au moins un des paramètres suivants : une quantité de nœuds actifs dans l'ensemble de services de base dans lequel le deuxième point d'accès est localisé, ou une puissance de transmission d'une station dans l'ensemble de services de base dans lequel le deuxième point d'accès est localisé.

2. Premier point d'accès selon la revendication 1, dans lequel les informations paramétriques envoyées par le deuxième point d'accès comprennent une quantité de nœuds actifs dans l'ensemble de services de base dans lequel le deuxième point d'accès est localisé, et l'unité d'ajustement (22) est configurée spécifiquement pour :
augmenter le seuil CCA du premier point d'accès lorsque la quantité de nœuds actifs dans l'ensemble de services de base dans lequel le deuxième point d'accès est localisé est plus grande qu'une quantité de nœuds actifs dans un ensemble de services de base dans lequel le premier point d'accès est localisé ; ou réduire le seuil CCA du premier point d'accès lorsque la quantité de nœuds actifs dans l'ensemble de services de base dans lequel le deuxième point d'accès est localisé est plus petite qu'une quantité de nœuds actifs dans un ensemble de services de base dans lequel le premier point d'accès est localisé.

3. Premier point d'accès selon la revendication 2, dans lequel l'unité d'ajustement (22) est configurée spécifiquement pour ajuster le seuil CCA du premier point d'accès en fonction des informations paramétriques envoyées par le deuxième point d'accès et d'autres informations paramétriques, et les autres informations paramétriques comprenant au moins un élément des informations suivantes : une localisation d'une station dans l'ensemble de services de base dans lequel le premier point d'accès est localisé, une puissance de transmission d'une station dans l'ensemble de services de base dans lequel le premier point d'accès est localisé, ou une perte de chemin de l'ensemble de services de base dans lequel le premier point d'accès est localisé.

4. Premier point d'accès selon l'une quelconque des revendications 1 à 3, dans lequel l'unité de réception (21) est configurée en outre pour recevoir un seuil CCA du deuxième point d'accès envoyé par le deuxième point d'accès ; et
l'unité d'ajustement (22) est configurée spécifiquement pour ajuster le seuil CCA du premier point d'accès en fonction des informations paramétriques et du seuil CCA du deuxième point d'accès qui sont envoyés par le deuxième point d'accès.

5. Premier point d'accès selon l'une quelconque des revendications 1 à 4, comprenant en outre :
une unité de stockage (23), configurée pour stocker une liste CCA, la liste CCA comprenant des informations d'identification d'un point d'accès avoisinant du premier point d'accès, un seuil CCA du point d'accès avoisinant, et des informations paramétriques qui indiquent un statut d'occupation de canal actuel d'un ensemble de services de base dans lequel le point d'accès avoisinant est localisé.

6. Premier point d'accès selon l'une quelconque des revendications 4 à 5, comprenant en outre :
une unité d'envoi (24), configurée pour envoyer un seuil CCA ajusté du premier point d'accès au point d'accès avoisinant du premier point d'accès.

7. Deuxième point d'accès, comprenant :
une unité de détermination (111), configurée pour déterminer des informations paramétriques ; et
une unité d'envoi (112), configurée pour envoyer les informations paramétriques à un premier point d'accès ;
**caractérisé en ce que** les informations paramétriques indiquent un statut d'occupation de canal actuel d'un ensemble de services de base dans lequel le deuxième point d'accès est localisé ; dans lequel les informations paramétriques incluent au moins un des paramètres suivants : une quantité de nœuds actifs dans l'ensemble de services de base dans lequel le deuxième point d'accès est localisé, ou une puissance de transmission d'une station dans l'ensemble de services de base dans lequel le deuxième point d'accès est localisé.

8. Deuxième point d'accès selon la revendication 7, dans lequel les informations paramétriques comprennent une quantité de nœuds actifs dans l'ensemble de services de base, et l'unité de détermination (111) est configuré spécifiquement pour :
lorsqu'une quantité de nœuds actifs ajoutés ou de nœuds actifs réduits dans l'ensemble de services de base dépasse un seuil, déterminer que la quantité de nœuds actifs dans l'ensemble de services de base représente les informations paramétriques.

9. Deuxième point d'accès selon la revendication 7 ou 8, dans lequel l'unité d'envoi (112) est configurée en outre pour envoyer un seuil d'évaluation de canal libre, CCA, du deuxième point d'accès au premier point d'accès.

10. Deuxième point d'accès selon la revendication 9, dans lequel l'unité d'envoi (112) est configurée spécifiquement pour envoyer une trame de réponse CCA au premier point d'accès, et la trame de réponse CCA comprenant le seuil CCA du deuxième point d'accès.

11. Procédé permettant d'ajuster un seuil d'évaluation de canal libre, comprenant :
la réception (121), par un premier point d'accès, d'informations paramétriques envoyées par un deuxième point d'accès ; et
l'ajustement (122), par le premier point d'accès, d'un seuil d'évaluation de canal libre, CCA, du premier point d'accès en fonction des informations paramétriques envoyées par le deuxième point d'accès ;
**caractérisé en ce que** les informations paramétriques envoyées par le deuxième point d'accès indiquent un statut d'occupation de canal actuel d'un ensemble de services de base dans lequel le deuxième point d'accès est localisé ; dans lequel les informations paramétriques envoyées par le deuxième point d'accès incluent au moins un des paramètres suivants : une quantité de nœuds actifs dans l'ensemble de services de base dans lequel le deuxième point d'accès est localisé, ou une puissance de transmission d'une station dans l'ensemble de services de base dans lequel le deuxième point d'accès est localisé.

12. Procédé selon la revendication 11, dans lequel les informations paramétriques envoyées par le deuxième point d'accès comprennent une quantité de nœuds actifs dans l'ensemble de services de base dans lequel le deuxième point d'accès est localisé, et l'ajustement (122), par le premier point d'accès, d'un seuil CCA du premier point d'accès en fonction des informations paramétriques envoyées par le deuxième point d'accès comprend :
l'augmentation, par le premier point d'accès, du seuil CCA du premier point d'accès lorsque la quantité de nœuds actifs dans l'ensemble de services de base dans lequel le deuxième point d'accès est localisé est plus grande qu'une quantité de nœuds actifs dans un ensemble de services de base dans lequel le premier point d'accès est localisé ; ou la réduction, par le premier point d'accès, du seuil CCA du premier point d'accès lorsque la quantité de nœuds actifs dans l'ensemble de services de base dans lequel le deuxième point d'accès est localisé est plus petite qu'une quantité de nœuds actifs dans un ensemble de services de base dans lequel le premier point d'accès est localisé.

13. Procédé selon la revendication 12, dans lequel l'ajustement (122), par le premier point d'accès, d'un seuil d'évaluation de canal libre CCA du premier point d'accès en fonction des informations paramétriques envoyées par le deuxième point d'accès comprend :
l'ajustement, par le premier point d'accès, du seuil CCA du premier point d'accès en fonction des informations paramétriques envoyées par le deuxième point d'accès et d'autres informations paramétriques, les autres informations paramétriques comprenant au moins un élément des informations suivantes : une localisation d'une station dans l'ensemble de services de base dans lequel le premier point d'accès est localisé, une puissance de transmission d'une station dans l'ensemble de services de base dans lequel le premier point d'accès est localisé, ou une perte de chemin de l'ensemble de services de base dans lequel le premier point d'accès est localisé.

14. Procédé selon l'une quelconque des revendications 11 à 13, comprenant en outre :
la réception (123), par le premier point d'accès, d'un seuil CCA du deuxième point d'accès envoyé par le deuxième point d'accès, dans lequel l'ajustement (122), par le premier point d'accès, d'un seuil d'évaluation de canal libre CCA du premier point d'accès en fonction des informations paramétriques envoyées par le deuxième point d'accès comprend :
l'ajustement, par le premier point d'accès, du seuil CCA du premier point d'accès en fonction des informations paramétriques et du seuil CCA du deuxième point d'accès qui sont envoyés par le deuxième point d'accès.

15. Procédé selon l'une quelconque des revendications 11 à 14, comprenant en outre :
la détermination (124), par le premier point d'accès, d'une liste CCA, la liste CCA comprenant des informations d'identification d'un point d'accès avoisinant du premier point d'accès, un seuil CCA du point d'accès avoisinant, et des informations paramétriques qui indiquent un statut d'occupation de canal actuel d'un ensemble de services de base dans lequel le point d'accès avoisinant est localisé.

16. Procédé selon l'une quelconque des revendications 13 à 15, comprenant en outre :
l'envoi (125), par le premier point d'accès, du seuil CCA ajusté du premier point d'accès au point d'accès avoisinant du premier point d'accès.

17. Procédé permettant d'ajuster un seuil d'évaluation de canal libre, comprenant :
la détermination (141), par un deuxième point, d'informations paramétriques ; et
l'envoi (142), par le deuxième point d'accès, des informations paramétriques à un premier point d'accès ;
**caractérisé en ce que** les informations paramétriques indiquent un statut d'occupation de canal actuel d'un ensemble de services de base dans lequel le deuxième point d'accès est localisé ; dans lequel les informations paramétriques incluent au moins un des paramètres suivants : une quantité de nœuds actifs dans l'ensemble de services de base dans lequel le deuxième point d'accès est localisé, ou une puissance de transmission d'une station dans l'ensemble de services de base dans lequel le deuxième point d'accès est localisé.

18. Procédé selon la revendication 17, dans lequel les informations paramétriques comprennent une quantité de nœuds actifs dans l'ensemble de services de base, et la détermination (141), par un deuxième point d'accès, d'informations paramétriques comprend :
lorsqu'une quantité de nœuds actifs ajoutés ou de nœuds actifs réduits dans l'ensemble de services de base dépasse un seuil, la détermination du fait que la quantité de nœuds actifs dans l'ensemble de services de base représente les informations paramétriques.

19. Procédé selon la revendication 17 ou 18, comprenant en outre :
l'envoi (143), par le deuxième point d'accès, d'un seuil d'évaluation de canal libre, CCA, du deuxième point d'accès au premier point d'accès.

20. Procédé selon la revendication 19, dans lequel l'envoi (143), par le deuxième point d'accès, d'un seuil d'évaluation de canal libre CCA du deuxième point d'accès au premier point d'accès comprend :
l'envoi, par le deuxième point d'accès, d'une trame de réponse CCA au premier point d'accès, la trame de réponse CCA comprenant le seuil CCA du deuxième point d'accès.
